# FASCICULE DE BREVET EUROPEEN

(11) **EP 3 574 314 B1**
(45) Date de publication et mention de la délivrance du brevet: **17.09.2025**
(21) Numéro de dépôt: 18704882.2
(22) Date de dépôt: 24.01.2018
(51) Int. Cl.: G01M 3/00

(54) **PROCEDE DE CONTROLE D'UNE LIGNE FLEXIBLE ET DISPOSITIF DE CONTROLE ASSOCIE**
VERFAHREN ZUR STEUERUNG EINER FLEXIBLEN LEITUNG UND ZUGEHÖRIGE STEUERUNGSVORRICHTUNG
METHOD FOR CONTROLLING A FLEXIBLE LINE AND ASSOCIATED CONTROL DEVICE

(30) Priorité: 24.01.2017 FR 1700061
(43) Date de publication de la demande: 04.12.2019
(73) Titulaire: TechnipFMC Subsea France, 92400 Courbevoie (FR)
(72) Inventeur: NICOLAS, Yann, 92500 Rueil Malmaison (FR); DECITRE, Jean-Marc, 91460 Marcoussis (FR); PUCCI, Laure, 92330 Sceaux (FR); PREMEL, Denis, 92160 Antony (FR)
(74) Mandataire: Lavoix
(86) Numéro de dépôt international: PCT/EP2018/051734
(87) Numéro de publication internationale: WO 2018/138151

(56) Documents cités:
- WO-A1-97/00453
- DE-A1- 3 504 609
- JP-A- 2011 027 216
- US-A1- 2016 025 663

## Description

### Domaine technique de l'invention

La présente invention a pour objet un procédé de contrôle non destructif d'une ligne flexible et un dispositif de contrôle non destructif associé.

Elle concerne le domaine technique du contrôle non destructif des installations pétrolières et gazières sous-marines, et plus spécifiquement celui du contrôle non destructif de l'espace annulaire des lignes flexibles sous-marines.

### Etat de la technique

Une ligne flexible, utilisée dans le domaine des installations pétrolières et gazières sous-marines, peut se présenter sous la forme :
- d'une conduite flexible de type non liée (« unbonded » en anglais) destinée au transport d'hydrocarbures à travers une étendue d'eau, tel qu'un océan, une mer, un lac ou une rivière, et par exemple réalisée suivant les documents normatifs API 17 J (Specification for Unbonded Flexible Pipe) et API RP 17 B (Recommended Practice for Flexible Pipe) établis par l'American Petroleum Institute, ou
- d'un ombilical renforcé par des armures destiné au transport d'énergies, de données, ou de produit d'injection, à travers une étendue d'eau, tel qu'un océan, une mer, un lac ou une rivière, et par exemple réalisé suivant les documents normatifs API 17 E (Specification for Umbilicals), ou
- d'une combinaison des deux.

Une telle ligne flexible est généralement formée d'un ensemble de couches cylindriques coaxiales et superposées. Une ligne flexible comprend au moins une couche d'armures agencée à l'intérieur d'un espace annulaire et une gaine externe entourant ledit espace annulaire. La ligne flexible est considérée comme « non liée » au sens de la présente invention dès lors qu'au moins une des couches de ladite ligne flexible est apte à se déplacer longitudinalement par rapport aux couches adjacentes lors d'une flexion de la ligne flexible. En particulier, une ligne flexible non liée est une ligne flexible généralement dépourvue de matériaux liants raccordant des couches formant la ligne flexible.

La ligne flexible est généralement disposée à travers une étendue d'eau, entre un ensemble de fond, destiné à recueillir le fluide extrait du fond de l'étendue d'eau et un ensemble de surface flottant ou fixe, destiné à collecter et à distribuer le fluide, ou peut aussi s'étendre entre deux installations de fond, ou peut encore s'étendre entre deux installations de surface. L'ensemble de surface peut être une plateforme semi-submersible, un FPSO ou un autre ensemble flottant.

Les lignes flexibles destinées aux grandes profondeurs sont soumises à de très fortes tensions, couramment plusieurs dizaines de tonnes, notamment lors de leur mise en service et/ou lors de leur installation en mer. En particulier, dans le cas où l'ensemble de surface est flottant et mobile en fonction des conditions de mer, les lignes flexibles montantes (« risers » en anglais) reliant le fond marin à l'ensemble de surface peuvent parfois être soumises à des millions de cycles de variation de courbure. Il en résulte des risques de dégradation et de rupture de la gaine externe qui n'assure alors plus sa fonction de protection de la ligne flexible. Dès lors un risque d'inondation de l'espace annulaire, notamment une inondation de la ou des couches d'armures de traction présentes dans ledit espace annulaire. Ces couches d'armures sont dans certains cas sensibles à la corrosion, notamment celle induite par la perméation de composés acides présents dans le fluide transporté et/ou par la présence d'eau dans l'espace annulaire suite à une dégradation de la gaine externe. Or, pour garantir la tenue en tension et en fatigue pendant toute la durée de vie de la ligne flexible, il est nécessaire de s'assurer de l'intégrité des couches d'armures de traction, généralement réalisées à partir d'enroulement hélicoïdaux de fils métalliques.

Pour détecter d'éventuelles dégradations ou ruptures de la gaine externe conduisant à des inondations de l'espace annulaire, différents tests sont mis en œuvre, tel que le test annulaire. Le test annulaire consiste à mesurer le volume courant de gaz dans l'espace annulaire de la ligne flexible par exemple en faisant le vide dans l'espace annulaire. Le volume courant de gaz mesuré est comparé au volume initial de l'espace annulaire pour en déduire si de l'eau a envahi partiellement ou totalement l'espace annulaire. Cependant, une telle mesure de volume est souvent peu précise et ne permet donc pas de statuer sur la présence et la hauteur d'éventuelles zones inondées menaçant l'intégrité de la ligne flexible.

Le document GB-B-2 446 670 décrit une méthode d'inspection sous-marine de l'intégrité de l'espace annulaire d'une ligne flexible basée sur la technique de l'échographie ultrasonore. Selon cette méthode, une sonde ultrasonore émet une onde ultrasonore incidente qui pénètre dans la ligne flexible. En retour, la sonde reçoit les ondes ultrasonores réfléchies aux discontinuités, c'est-à-dire aux interfaces, rencontrées dans la ligne flexible. Les amplitudes des ondes ultrasonores réfléchies permettent, notamment, de déterminer si la portion de la ligne flexible inspectée est inondée. Une telle méthode se base sur une propriété des ondes ultrasonores selon laquelle les ondes ultrasonores se propagent peu dans un gaz par opposition à un milieu liquide tel que l'eau. Ainsi, une interface comportant un gaz, génère des ondes ultrasonores réfléchies de plus grande amplitude qu'une interface comportant un liquide.

Cependant, la méthode par ultrason atteint ses limites lorsque la ligne flexible est soumise à la fois à une pression interne et à la fois à une pression externe, ce qui est notamment le cas lorsque ladite ligne flexible est immergée dans une étendue d'eau. En effet, dans une configuration de ligne flexible dans laquelle la gaine externe et la couche d'armures sont mitoyennes, l'espace annulaire rempli de gaz, et à partir d'un certain niveau de pression, généralement au-dessus d'une dizaine de bars, ladite gaine externe et ladite couche d'armures sont comprimées l'une contre l'autre de sorte que l'interface entre ladite gaine externe et la couche d'armures ne comporte plus de gaz. On parle alors de contact intime entre les deux couches. Dans un tel cas, l'onde ultrasonore incidente se propagent majoritairement au travers de l'interface, et les ondes réfléchies sont de très faible amplitude, à l'image d'un espace annulaire qui serait rempli de liquide, de tel sorte qu'il est impossible de déterminer la présence du gaz. Ainsi, lorsque la pression de contact entre la gaine externe et les éléments d'armures est supérieure à quelques dizaines de bars, la méthode d'inspection présentée dans le brevet GB-B-2 446 670 ne permet pas de faire la distinction entre un espace annulaire inondé et un espace annulaire sec. Dans une autre configuration de ligne flexible dans laquelle une ou plusieurs gaines intermédiaires sont agencées entre la gaine externe et la couche d'armures, les différentes interfaces entre la gaine externe et les gaines intermédiaires peuvent comporter du gaz, de sorte que les ondes ultrasonores sont directement réfléchies au niveau de ces interfaces avant même qu'elles aient pu atteindre l'espace annulaire. Ici aussi, la méthode d'inspection présentée dans le brevet GB-B-2 446 670 ne permet pas de faire la distinction entre un espace annulaire inondé et un espace annulaire sec.

En outre, une méthode de contrôle par ultrason nécessite un balayage mécanique d'une pluralité de régions à contrôler successives de la gaine externe et la répétition, pour chaque région à contrôler de la gaine externe, des étapes d'envoi, de réception, d'analyse et de détermination du milieu à l'interface entre la région à contrôler de la gaine externe et l'espace annulaire en regard de la région à contrôler de la gaine externe. Ainsi, il est généralement nécessaire de monter la sonde ultrasonore sur un plateau tournant motorisé dont le poids et la complexité de mise en œuvre ne sont pas négligeables.

JP2011027216 décrit une conduite liée de transport d'hydrocarbures, munie d'un système de détection de fuites noyé dans la conduite.

L'invention a ainsi pour but de fournir un procédé de contrôle de l'intégrité d'une ligne flexible, en particulier de l'espace annulaire de la ligne flexible, qui soit non intrusif, simple à mettre en oeuvre et fiable quelle que soit la pression extérieure appliquée à la ligne flexible.

### Divulgation de l'invention

La solution proposée par l'invention, selon la revendication 1, est un procédé de contrôle non destructif d'une ligne flexible comprenant au moins une couche d'armures agencée à l'intérieur d'un espace annulaire et une gaine externe entourant ledit espace annulaire, ledit espace annulaire comprenant un fluide. Le procédé de contrôle non destructif est remarquable en ce qu'il comprend les étapes suivantes :
a) agencer au voisinage de la gaine externe au moins un couple d'électrodes,
b) alimenter en tension alternative de fréquence déterminée, ou en courant alternatif de fréquence déterminée, ledit couple d'électrodes, ou un premier couple d'électrodes desdits couples d'électrodes, de manière à générer un champ électromagnétique s'étendant au travers d'au moins une partie de l'espace annulaire,
c) mesurer, au niveau dudit couple d'électrodes, ou d'un deuxième couple d'électrodes desdits couples d'électrodes, un signal électrique lié aux caractéristiques électromagnétiques de ladite au moins une partie de l'espace annulaire soumise audit champ électromagnétique généré,
d) traiter ledit signal électrique de manière à déterminer la nature du fluide contenu dans l'espace annulaire.

Lors de l'étape a), le au moins un couple d'électrodes est agencé à l'extérieur de ladite ligne flexible, au voisinage de la gaine externe. En variante, à l'étape b), l'alimentation dudit couple d'électrodes est en tension pulsée, ou en courant pulsé. Avantageusement, l'ensemble formé d'armures et du fluide est soumis au champ électromagnétique.

À l'étape d), ledit signal électrique est comparé avec des valeurs de référence de manière à déterminer si le fluide contenu dans l'espace annulaire est un gaz ou un liquide.

Ainsi, le procédé de contrôle non-destructif objet de l'invention permet de contrôler la nature du fluide contenu dans l'espace annulaire d'une ligne flexible, via un champ électromagnétique qui permet de traverser une ou plusieurs gaines quel que soit le type de contact, intime ou non, entre la gaine externe, la couche d'armures, et éventuellement les gaines intermédiaires. De même cette méthode possède l'avantage de ne nécessiter qu'une seule mesure et permet donc de s'affranchir de la mise en place d'une étape de balayage.

L'interaction du champ électromagnétique avec la ligne flexible dépend notamment de la géométrie et des propriétés électromagnétiques des différents composants présents dans la ligne flexible. Les principales propriétés électromagnétiques sont la conductivité électrique, la permittivité diélectrique et les propriétés magnétiques, notamment la perméabilité magnétique.

La gaine externe de la ligne flexible est généralement constituée de matériaux polymériques électriquement isolants (conductivité électrique quasiment nulle) et amagnétiques (perméabilité magnétique identique à celle du vide). Par suite, le champ électromagnétique peut facilement traverser la gaine externe sans subir une forte atténuation, et atteindre l'espace annulaire.

Le fluide présent dans l'espace annulaire a du fait de ses propriétés électromagnétiques une influence sur le champ électromagnétique et c'est cette influence que le présent procédé vise à exploiter afin de déterminer indirectement la nature du fluide via des mesures électriques.

En outre le contrôle non-destructif peut être effectué sur une ligne flexible standard sans qu'il soit nécessaire de modifier structurellement la ligne flexible, tous les éléments du dispositif de contrôle non-destructif étant agencés à l'extérieur de la conduite, et ce même si certains desdits éléments dudit dispositif de contrôle non-destructif sont aptes à interagir électromagnétiquement avec des éléments internes à la ligne flexible.

Dans la présente demande, le terme « tension alternative » désigne une tension qui varie périodiquement en fonction du temps, la « fréquence déterminée » étant la fréquence de cette fonction périodique. Le terme « tension alternative » n'est pas limité aux tensions sinusoïdales et il englobe aussi des tensions périodiques non sinusoïdales, par exemple des tensions périodiques du type triangulaire ou créneau. De même, dans le présente demande, le terme « courant alternatif » désigne un courant qui varie périodiquement en fonction du temps.

Avantageusement, lors de l'étape b), l'alimentation est faite avec une tension alternative sinusoïdale de fréquence déterminée, ou avec un courant alternatif sinusoïdal de fréquence déterminée.

Selon une autre caractéristique avantageuse de l'invention permettant d'obtenir une méthode simple de mise en œuvre au moyen d'un dispositif compact, lors de l'étape a), un unique couple d'électrodes est agencé au voisinage de la gaine externe.

Selon encore une autre caractéristique avantageuse de l'invention permettant d'améliorer la sensibilité de la mesure, l'unique couche d'armures, ou lorsque la ligne flexible comprend plusieurs couches d'armures la couche d'armures la plus proche de la gaine externe, comprend au moins un premier groupe d'armures et un deuxième groupe d'armures distincts l'un de l'autre et en ce que l'étape a) comprend les étapes suivantes :
a1) agencer une première électrode de l'unique couple d'électrodes en vis-à-vis du premier groupe d'armures,
a2) agencer une deuxième électrode de l'unique couple d'électrodes en vis-à-vis du deuxième groupe d'armures.

Avantageusement, la première électrode est placée exclusivement en vis-à-vis du premier groupe d'armures sans être placée en vis-à-vis du deuxième groupe d'armures. La deuxième électrode est placée exclusivement en vis-à-vis du deuxième groupe d'armures, sans être placée en vis-à-vis du premier groupe d'armures.

Selon encore une autre caractéristique avantageuse de l'invention permettant de découpler la prise de mesures et l'alimentation en tension alternative ou en courant alternatif de manière à améliorer la précision de la mesure, lors de l'étape a), deux couples d'électrode sont agencés au voisinage de la gaine externe, à savoir d'une part un premier couple d'électrodes et d'autres part un deuxième couple d'électrodes.

Selon encore une autre caractéristique avantageuse de l'invention permettant d'améliorer la sensibilité de la mesure, l'unique couche d'armures, ou lorsque la ligne flexible comprend plusieurs couches d'armures la couche d'armures la plus proche de la gaine externe, comprend au moins un premier groupe d'armures et un deuxième groupe d'armures distincts l'un de l'autre et en ce que l'étape a) comprend les étapes suivantes :
a3) agencer une première électrode du premier couple d'électrodes en vis-à-vis du premier groupe d'armures,
a4) agencer une deuxième électrode du premier couple d'électrodes en vis-à-vis du deuxième groupe d'armures.

Avantageusement, la première électrode du premier couple d'électrodes est placée exclusivement en vis-à-vis du premier groupe d'armures sans être placée en vis-à-vis du deuxième groupe d'armures. La deuxième électrode du premier couple d'électrodes est placée exclusivement en vis-à-vis du deuxième groupe d'armures, sans être placée en vis-à-vis du premier groupe d'armures.

Selon encore une autre caractéristique avantageuse de l'invention permettant d'améliorer la sensibilité de la mesure, l'étape a) comprend les étapes suivantes :
a5) agencer une première électrode du deuxième couple d'électrodes en vis-à-vis du premier groupe d'armures,
a6) agencer une deuxième électrode du deuxième couple d'électrodes en vis-à-vis du deuxième groupe d'armures.

Avantageusement, la première électrode du deuxième couple d'électrodes est placée exclusivement en vis-à-vis du premier groupe d'armures sans être placée en vis-à-vis du deuxième groupe d'armures. La deuxième électrode du deuxième couple d'électrodes est placée exclusivement en vis-à-vis du deuxième groupe d'armures, sans être placée en vis-à-vis du premier groupe d'armures.

Selon encore une autre caractéristique avantageuse de l'invention permettant d'améliorer la sensibilité de la mesure, l'unique couche d'armures, ou lorsque la ligne flexible comprend plusieurs couches d'armures la couche d'armures la plus proche de la gaine externe, comprend au moins un troisième groupe d'armures et un quatrième groupe d'armures distincts l'un de l'autre et distincts du premier groupe d'armures et du deuxième groupe d'armures, ledit troisième groupe d'armures et ledit quatrième groupe d'armures étant agencés entre ledit premier groupe d'armures et ledit deuxième groupe d'armures, et l'étape a) comprend les étapes suivantes :
a7) agencer une première électrode du deuxième couple d'électrodes en vis-à-vis du troisième groupe d'armures,
a8) agencer une deuxième électrode du deuxième couple d'électrodes en vis-à-vis du quatrième groupe d'armures.

Avantageusement, la première électrode du deuxième couple d'électrodes est placée exclusivement en vis-à-vis du troisième groupe d'armures sans être placée en vis-à-vis du premier groupe d'armure, du deuxième groupe d'armures ou du quatrième groupe d'armures. La deuxième électrode du deuxième couple d'électrodes est placée exclusivement en vis-à-vis du quatrième groupe d'armures, sans être placée en vis-à-vis du premier groupe d'armures, du deuxième groupe d'armures ou du troisième groupe d'armures.

Selon encore une autre caractéristique avantageuse de l'invention permettant d'améliorer la sensibilité de la mesure, l'étape a) comprend l'étape suivante :
a9) agencer les électrodes du au moins un couple d'électrodes en contact avec la gaine externe.

Selon encore une autre caractéristique avantageuse de l'invention permettant d'assurer une bonne pénétration du champ électromagnétique à travers la gaine externe et les éventuelles gaines intermédiaires, ainsi qu'une bonne interaction du champ électromagnétique avec le fluide contenu dans l'espace annulaire, l'étape b) comprend l'étape suivante :
b1) alimenter en tension alternative, ou en courant alternatif, de fréquence déterminée comprise entre 10 Hz et 10 MHz, avantageusement entre 100 kHz et 3 MHz, préférentiellement comprise entre 200 kHz et 800 kHz ou entre 100 Hz et 200 kHz.

Selon encore une autre caractéristique avantageuse de l'invention permettant d'obtenir un signal électrique facilement exploitable et mesurable avec des instruments de mesure disponible dans le commerce, dans le cas où lors de l'étape a) un unique couple d'électrodes est agencé au voisinage de la gaine externe, le signal électrique mesuré lors de l'étape c) est l'impédance complexe aux bornes dudit unique couple d'électrodes. L'impédance est dite complexe car elle a un module et une phase, et qu'elle peut être représentée dans un plan complexe. Dans ce mode de réalisation, le signal électrique mesuré est un signal complexe, car il a un module et une phase, et peut être représenté dans un plan complexe.

Dans le cas où lors de l'étape a) deux couples d'électrodes sont agencés au voisinage de la gaine externe, à savoir d'une part un premier couple d'électrodes et d'autre part un deuxième couple d'électrodes, selon encore une autre caractéristique avantageuse de l'invention permettant d'obtenir un signal électrique facilement exploitable et mesurable avec des instruments de mesure disponible dans le commerce, le signal électrique mesuré lors de l'étape c) est un signal complexe ayant un module et une phase. Selon une première variante de ce mode de réalisation de l'invention, le module dudit signal complexe est égal à l'amplitude de la tension alternative mesurée aux bornes du deuxième couple d'électrodes, et la phase dudit signal complexe est égale au déphasage mesuré entre d'une part la tension alternative aux bornes du deuxième couple d'électrodes et d'autre part la tension ou le courant alternatif alimentant le premier couple d'électrodes. Selon une deuxième variante de ce mode de réalisation de l'invention, le module dudit signal complexe est égal au rapport entre d'une part l'amplitude de la tension alternative mesurée aux bornes du deuxième couple d'électrodes et d'autre part l'amplitude de la tension alternative alimentant le premier couple d'électrodes, et la phase dudit signal complexe est égale au déphasage mesuré entre d'une part la tension alternative aux bornes du deuxième couple d'électrodes et d'autre part la tension alternative alimentant le premier couple d'électrodes. Ce signal complexe est la transmittance complexe du quadripôle dont les deux bornes d'entrée sont reliées au premier couple d'électrodes et dont les deux bornes de sortie sont reliées au deuxième couple d'électrodes. Selon une troisième variante de ce mode de réalisation de l'invention, le module dudit signal complexe est égal au rapport entre d'une part l'amplitude de la tension alternative mesurée aux bornes du deuxième couple d'électrodes et d'autre part l'amplitude du courant alternatif alimentant le premier couple d'électrodes, et la phase dudit signal complexe est égale au déphasage mesuré entre d'une part la tension alternative aux bornes du deuxième couple d'électrodes et d'autre part le courant alternatif alimentant le premier couple d'électrodes.

Dans la présente demande, l'amplitude d'une tension alternative est définie en comparant les valeurs instantanées de tension au cours d'une période avec la valeur moyenne de la tension au cours de cette période, l'amplitude étant égale au maximum des valeurs absolues des différences entre d'une part les valeurs instantanées et d'autre part la valeur moyenne. Dans le cas d'une tension alternative sinusoïdale, l'amplitude ainsi définie est égale à la tension efficace multipliée par la racine carrée de deux. De même, dans la présente demande, l'amplitude d'un courant alternatif est définie en comparant les valeurs instantanées du courant au cours d'une période avec la valeur moyenne du courant au cours de cette période, l'amplitude étant égale au maximum des valeurs absolues des différences entre d'une part les valeurs instantanées et d'autre part la valeur moyenne.

Selon encore une autre caractéristique avantageuse de l'invention permettant d'exploiter simplement un signal complexe, l'étape d) comprend l'étape suivante :
d1) comparer le module et/ou la phase du signal électrique mesuré avec des valeurs de référence de manière à déterminer la nature du fluide contenu dans l'espace annulaire (13).

Selon encore une autre caractéristique avantageuse de l'invention permettant de garantir la précision de la mesure, lors des étape b) et c) la distance séparant les électrodes du ou de chacun des couples d'électrodes est maintenue fixe.

Selon encore une autre caractéristique avantageuse de l'invention permettant de s'assurer qu'un nombre suffisant d'armures soit agencé entre les électrodes, lors des étape b) et c) la distance séparant les électrodes du ou de chacun des couples d'électrodes est maintenue comprise entre 100 mm et 500 mm, préférentiellement entre 200 mm et 500 mm.

Selon encore une autre caractéristique avantageuse de l'invention, le groupe d'étapes b), c) et d) est exécuté plusieurs fois, simultanément ou séquentiellement, avec pour chaque exécution une fréquence déterminée différente.

Un autre aspect de la description concerne un dispositif de contrôle non destructif d'une ligne flexible comprenant au moins une couche d'armures agencée à l'intérieur d'un espace annulaire et une gaine externe entourant ledit un espace annulaire, ledit espace annulaire comprenant un fluide. Le dispositif de contrôle est remarquable en ce qu'il comprend :
- un générateur de champ électromagnétique configuré pour générer un champ électromagnétique s'étendant au travers d'au moins une partie de l'espace annulaire, ledit générateur de champ électromagnétique comprenant :
- au moins un couple d'électrodes destinées à être agencées au voisinage de la gaine externe,
- un générateur de tension, ou de courant, configuré pour alimenter en tension alternative de fréquence déterminée, respectivement en courant alternatif de fréquence déterminée, l'unique couple d'électrodes ou un premier couple d'électrodes desdits couples d'électrodes de manière à générer un champ électromagnétique s'étendant au travers d'au moins une partie de l'espace annulaire
- un instrument de mesure configuré pour mesurer, au niveau dudit couple d'électrodes, ou d'un deuxième couple d'électrodes desdits couples d'électrodes, un signal électrique lié aux caractéristiques électromagnétiques de ladite au moins une partie de l'espace annulaire soumise audit champ électromagnétique généré,
- un comparateur configuré pour comparer ledit signal électrique avec des valeurs de référence de manière à déterminer la nature du fluide contenu dans l'espace annulaire.

Avantageusement, le au moins un couple d'électrodes est agencé à l'extérieur de ladite ligne flexible, au voisinage de la gaine externe.

En variante, l'alimentation de l'unique couple d'électrodes ou du premier couple d'électrodes est en tension pulsée, ou en courant pulsé. Avantageusement, l'ensemble formé d'armures et du fluide est soumis au champ électromagnétique.

Ainsi, le dispositif de contrôle non destructif décrit permet de contrôler la nature du fluide contenu dans l'espace annulaire d'une ligne flexible, via un champ électromagnétique apte à traverser une ou plusieurs gaines quel que soit le type de contact, intime ou non, entre la gaine externe, la couche d'armures, et éventuellement les gaines intermédiaires. De même ce dispositif possède l'avantage d'être efficace dès la première mesure et permet donc de s'affranchir de la mise en place d'un moyen de balayage mécanique du type plateau tournant.

Selon encore une autre caractéristique avantageuse permettant la génération d'un champ électromagnétique optimal, les électrodes du ou des couples d'électrodes comprennent un corps conducteur en métal, préférentiellement en cuivre.

Selon encore une autre caractéristique avantageuse permettant la génération d'un champ électromagnétique optimal, le corps conducteur des électrodes du ou des couples d'électrodes ont une forme parallélépipédique de base rectangulaire dont la longueur et la largeur sont comprises entre 20 mm et 250 mm, préférentiellement de base carrée de côtés égaux à 70 mm.

Selon encore une autre caractéristique avantageuse, permettant de mesurer simplement l'impédance aux bornes d'un couple d'électrodes, l'instrument de mesure est un analyseur de réseau vectoriel.

### Description des figures

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique du dispositif de contrôle non destructif destiné à la mise en œuvre du procédé selon l'invention agencé en vis-à-vis d'une ligne flexible s'étendant d'un ensemble de fond jusqu'à un ensemble de surface à travers une étendue d'eau ;
- la Figure 2 est une vue schématique en perspective d'un exemple de ligne flexible que l'invention se propose de contrôler ;
- la Figure 3 est une vue schématique d'un premier exemple de réalisation du dispositif de contrôle non destructif destiné à la mise en œuvre du procédé selon l'invention ;
- la Figure 4 est une vue schématique d'une première variante d'un deuxième exemple de réalisation du dispositif de contrôle non destructif destiné à la mise en œuvre du procédé selon l'invention ;
- la Figure 5 est une vue schématique d'une deuxième variante du deuxième exemple de réalisation du dispositif de contrôle non destructif destiné à la mise en œuvre du procédé selon l'invention ;
- la Figure 6 est une vue schématique en perspective de la deuxième variante représentée à la figure 5 ;
- la Figure 7 représente schématiquement :
   - en trait interrompu la courbe des valeurs de référence du module (M) du signal complexe en fonction de la fréquence déterminée (F), correspondant au cas où l'espace annulaire de la ligne flexible contient un gaz, et
   - en trait plein la courbe du module (M) des signaux complexes mesurés en fonction de la fréquence déterminée (F), lorsque l'espace annulaire de la ligne flexible contient un liquide, et
   - le décalage fréquentiel (D) entre les deux courbes ;

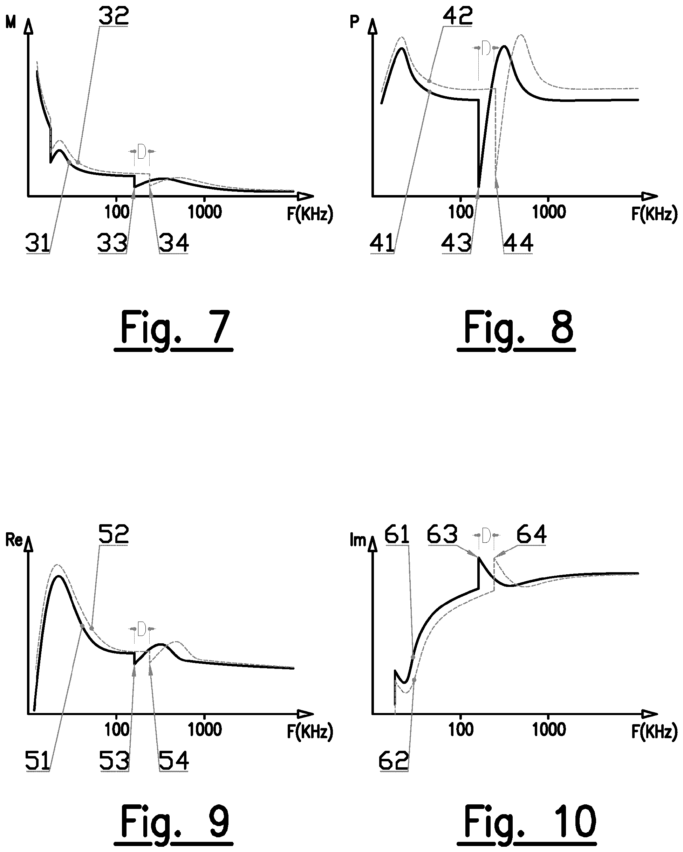

- la Figure 8 représente schématiquement :
   - en trait interrompu la courbe des valeurs de référence de la phase (P) du signal complexe en fonction de la fréquence déterminée (F), correspondant au cas où l'espace annulaire de la ligne flexible contient un gaz, et
   - en trait plein la courbe de la phase (P) des signaux complexes mesurés en fonction de la fréquence déterminée (F), lorsque l'espace annulaire de la ligne flexible contient un liquide, et
   - le décalage fréquentiel (D) entre les deux courbes ;
- la Figure 9 représente schématiquement :
   - en trait interrompu la courbe des valeurs de référence de la partie réelle (Re) du signal complexe en fonction de la fréquence déterminée (F), correspondant au cas où l'espace annulaire de la ligne flexible contient un gaz, et
   - en trait plein la courbe de la partie réelle (Re) des signaux complexes mesurés en fonction de la fréquence déterminée (F), lorsque l'espace annulaire de la ligne flexible contient un liquide, et
   - le décalage fréquentiel (D) entre les deux courbes ;
- la Figure 10 représente schématiquement :
   - en trait interrompu la courbe des valeurs de référence de la partie imaginaire (Im) du signal complexe en fonction de la fréquence déterminée (F), correspondant au cas où l'espace annulaire de la ligne flexible contient un gaz, et
   - en trait plein la courbe de la partie imaginaire (Im) des signaux complexes mesurés en fonction de la fréquence déterminée (F), lorsque l'espace annulaire de la ligne flexible contient un liquide, et
   - le décalage fréquentiel (D) entre les deux courbes.

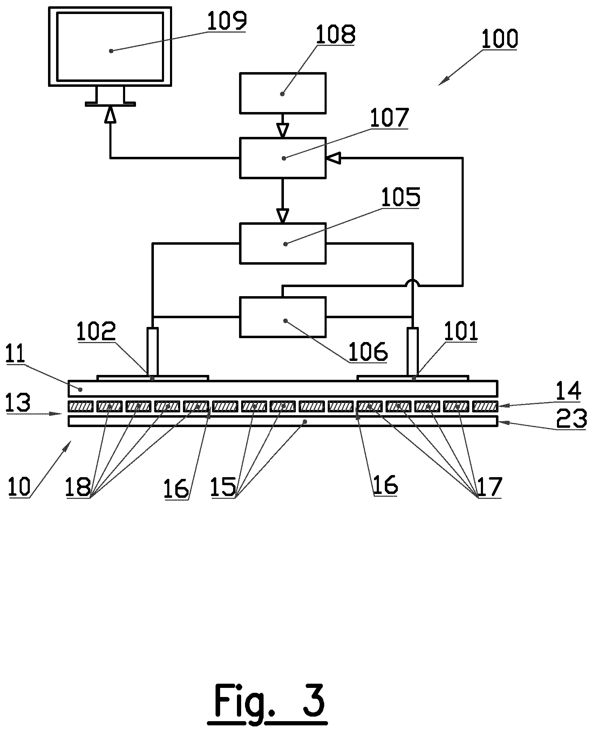

Par mesure de simplification, les différents éléments de la ligne flexible sont schématisés à plat sur les figure 3 à 5, bien qu'en réalité ils sont généralement arrangés en arc de cercle.

### Description détaillée de l'invention

La solution proposée par l'invention est un procédé de contrôle non destructif d'une ligne flexible (10) et le dispositif (100) permettant la mise en oeuvre de ce procédé.

On entend par « ligne flexible » au sens de l'invention, toute ligne flexible utilisée dans le domaine des installations pétrolières et/ou gazières sous-marines pour le transport de fluides, d'énergie ou encore d'informations. Une installation pétrolière et/ou gazière sous-marine comporte généralement un ou plusieurs ensembles de surface (2) et un ou plusieurs ensembles de fond (3).

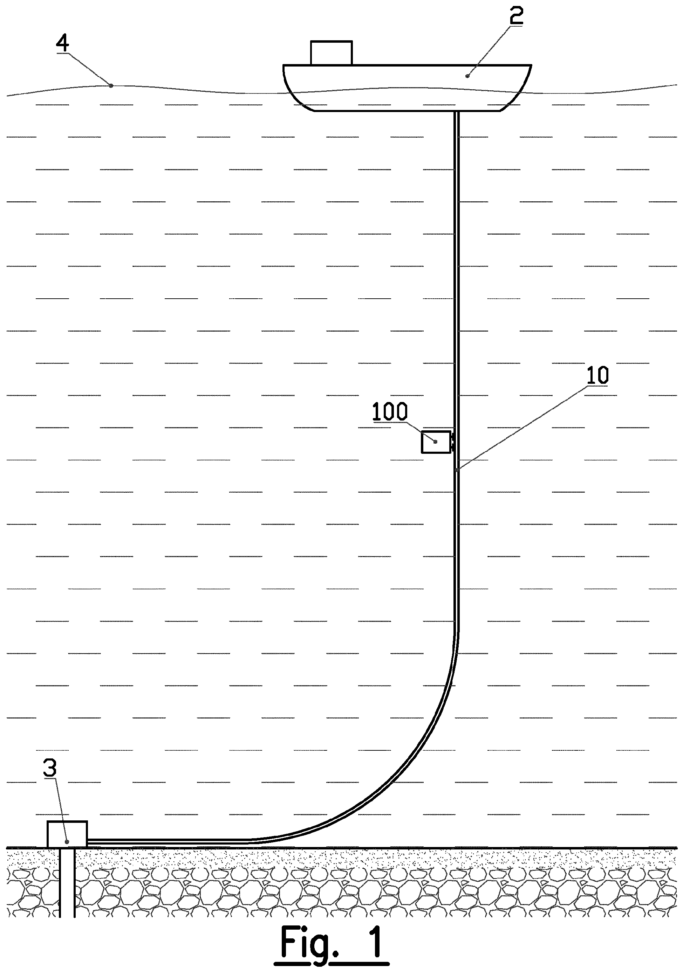

En se référant à la figure 1, un ensemble de surface (2) est agencé à la surface d'une étendue d'eau (4). L'étendue d'eau (4) est par exemple un océan, une mer, un lac ou une rivière. L'ensemble de surface (2) peut être fixe ou flottant. Lorsqu'il est fixe, l'ensemble de surface (2) repose sur une structure de type treillis ou gravitaire fixé sur le fond de l'entendue d'eau. Lorsqu'il est flottant, l'ensemble de surface (2) est avantageusement formé par un support naval de surface pouvant être par exemple une unité flottante de production, de stockage et de déchargement appelée FPSO (« Floating Production, Storage and Offloading » en langue anglaise) ou une unité flottante dédiée au gaz naturel liquéfié appelée FLNG (« Floating Liquified Natural Gas » en langue anglaise), une plate-forme semi-submersible, pouvant être par exemple un TLP (« Tension Leg Platform » en langue anglaise), une bouée de déchargement, une colonne verticale flottante ou un navire.

Un ensemble de fond (3) est agencé sur le fond de l'étendue d'eau (4) et se présente sous la forme d'un ou d'un ensemble de dispositifs de production sous-marin de type puits (« well » en langue anglaise), tête de puits (« wellhead », « christmas tree » ou encore « X-tree » en langue anglaise), collecteur (« manifold » en langue anglais), unité de traitement sous-marine (« subsea processing unit » en langue anglaise, également abrévié « SPU »), unité de stockage sous-marine (« subsea storage unit» en langue anglaise, également abrégé « SSU »), etc.

L'installation pétrolière et/ou gazière comprend également un réseau de lignes flexibles (1) et/ou rigides permettant de relier entre eux le ou ensembles de surface (2) et le ou plusieurs ensembles de fond (3). Ces lignes flexibles (1) ou rigides sont au moins partiellement immergées dans l'étendue d'eau (4). La profondeur de l'étendue d'eau (4) au droit de l'installation est par exemple comprise entre 50 m et 3000 m, voire 4000 m.

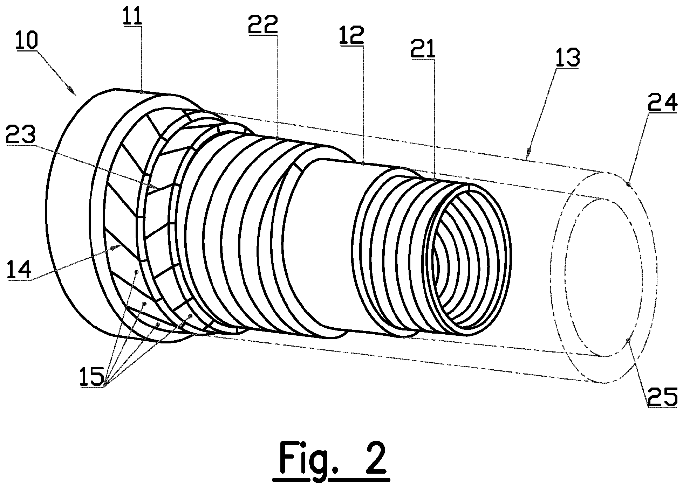

La ligne flexible (10) peut se présenter sous la forme :
- d'une conduite flexible, comme représentée sur la figure 2, de type non liée (« unbonded » en anglais) destinée au transport d'hydrocarbures à travers l'étendue d'eau (4), et par exemple réalisée suivant les documents normatifs API 17 J (Specification for Unbonded Flexible Pipe) et API RP 17 B (Recommended Practice for Flexible Pipe) établis par l' American Petroleum Institute, ou
- d'un ombilical renforcé par des d'armures destiné au transport d'énergie électrique ou hydraulique, de données, ou de produits d'injection, à travers l'étendue d'eau (4), et par exemple réalisé suivant les documents normatifs API 17 E (Specification for Umbilicals), ou
- d'une combinaison des deux.

La ligne flexible (10) comprend au moins une couche d'armures (14, 23). Chaque couche d'armures (14, 23) se présente sous la forme d'une juxtaposition de plusieurs armures (15), généralement entre 30 et 100 armures (15). Les armures (15), généralement dites armures de traction, ont pour fonction la reprise des efforts de traction exercés sur la ligne flexible (10). La limite à la rupture en traction des armures (15) est avantageusement supérieure à 1000 MPa. Deux armures (15) mitoyennes peuvent être séparées par un interstice (16) d'une largeur comprise entre 5 mm et 0.001 mm. Les armures (15) sont enroulées hélicoïdalement de manière à former un tube. La valeur absolue de l'angle d'hélice de l'hélicoïde formé par une armure (15) est inférieure à 60°, et est typiquement comprise entre 25° et 55°. Une armure (15) se présente sous la forme de fil de section rectangulaire, carrée, circulaire, ovale, en forme de haricot, de T, ou toute autre forme convenant à l'homme du métier.

Dans certaines configurations, la ligne flexible (10) peut comprendre une paire de couches d'armures (14, 23). Les deux couches d'armures (14, 23) sont croisées, c'est-à-dire qu'elles ont des angles d'hélices sensiblement opposés, de façon à équilibrer la structure de la ligne flexible (10) en torsion, c'est-à-dire de façon à limiter sa tendance à tourner sous l'effet d'une traction. Les deux couches d'armures (14, 23) sont agencées coaxialement, une première couche d'armures (14) étant la couche d'armure la plus proche de la gaine externe, et la deuxième couche d'armures (23) étant située à l'intérieur de la première couche d'armures (14).

Les armures (15) peuvent être réalisées en métal, avantageusement en acier au carbone ou en acier faiblement allié ou en acier inoxydable. Les armures en métal sont généralement obtenues par tréfilage, laminage, et traitement thermique de fils métalliques. Les armures (15) en métal ont une conductivité électrique généralement comprise entre 3x10⁶ S/m et 10x10⁶ S/m, préférentiellement entre 5,5x10⁶ S/m et 6,5x10⁶ S/m. Lorsqu'elles sont réalisées en acier au carbone ou en acier faiblement allié, les armures (15) en métal sont magnétiques et ont une perméabilité magnétique relative généralement supérieure ou égale à 100. Cependant, la présente invention peut aussi s'appliquer au cas où les armures (15) en métal sont amagnétiques ou faiblement magnétiques, par exemple si celles-ci sont réalisées en titane, en aluminium ou dans certaines nuances d'acier inoxydable austénitique.

Les armures (15) peuvent être réalisées en matériaux composites, composés d'une matrice et de fibres de renfort. La matrice est formée à base d'une résine thermodurcissable, par exemple une résine époxy, ou d'une résine thermoplastique, par exemple une résine à base de polyétheréthercétone (PEEK), de polyfluorure de vinylidène (PVDF) ou de polyphénylène sulphide (PPS). La matrice est généralement amagnétique et électriquement isolante (conductivité électrique quasiment nulle). Les fibres de renfort sont généralement orientées parallèlement à l'axe de l'armure et peuvent être constituées de carbone, de verre ou d'aramide. Le verre, le carbone et l'aramide sont amagnétiques. Le verre et l'aramide sont des isolants électriques tandis que le carbone est conducteur. Les armures (15) en matériau composite à base de fibres de carbone ont une conductivité électrique généralement comprise entre 10x10³ S/m et 50x10³ S/m. Les armures (15) ont généralement une largeur pouvant varier de 10 mm à 30 mm et une épaisseur pouvant varier de 0.5 mm à 10 mm.

La au moins une couche d'armures (14, 23) est agencée à l'intérieur d'un espace annulaire (13). On entend par « espace annulaire », au sens de l'invention, un espace délimité par deux cylindres fictifs (24, 25) de rayons différents agencés coaxialement. L'épaisseur de l'espace annulaire (13), correspondant à la différence des rayons des deux cylindres fictifs, est généralement comprise entre de 5 mm et 60 mm, voire plus. L'espace annulaire (13) comprend un fluide. Ce fluide est généralement un gaz lorsque la ligne flexible (10) est intègre et un liquide lorsque la gaine flexible a subi une dégradation.

Au niveau de l'unique couche d'armures (14), ou lorsque la ligne flexible (10) comprend plusieurs couches d'armures (14, 23) de la couche d'armures (14) la plus proche de la gaine externe (11), cette dernière étant décrite plus en détails dans la suite de la description, et pour les besoins du procédé de contrôle non destructif, il est possible d'identifier plusieurs groupes d'armures (17, 18, 19, 20) comprenant de 2 à 6 armures (15), voire plus. Ainsi, la couche d'armures (14) la plus proche de la gaine externe (11) peut comprendre au moins un premier groupe d'armures (17) et un deuxième groupe d'armures (18) distincts l'un de l'autre. La couche d'armures (14) la plus proche de la gaine externe (11) peut également comprendre au moins un troisième groupe d'armures (19) et un quatrième groupe d'armures (20) distincts l'un de l'autre et distincts du premier groupe d'armures (17) et du deuxième groupe d'armures (18). Le troisième groupe d'armures (19) et le quatrième groupe d'armures (20) sont préférentiellement agencés entre le premier groupe d'armures (17) et le deuxième groupe d'armures (18).

La ligne flexible (10) comprend au moins une gaine externe (11). La gaine externe (11) est agencée de manière à entourer ledit espace annulaire (13). On entend par « entourer » au sens de la présence invention, le fait que l'espace annulaire (13) est inscrit dans un cylindre formé par la gaine externe (11), cette dernière pouvant être, ou non, mitoyenne avec ledit espace annulaire (13). En effet, dans certains modes de réalisation, la ligne flexible (10) peut comprendre une ou plusieurs gaines intermédiaires intercalées entre la gaine externe (11) et l'espace annulaire (13). La gaine externe (11) se présente sous la forme d'un tube souple de section circulaire, éventuellement ovale. La gaine externe (11) est réalisée en polymère, par exemple en polyamide, en polyéthylène ou en polymère thermoplastique élastomère. La gaine externe (11) a généralement une épaisseur pouvant varier de 2 mm à 20 mm. La gaine externe (11) est généralement obtenue par extrusion. La gaine externe (11) est amagnétique et électriquement isolante (conductivité électrique quasiment nulle).

En pratique, et comme représenté schématiquement à la figure 2, lorsque la ligne flexible (10) est une conduite flexible, elle peut comprendre de l'intérieur vers l'extérieur :
- une carcasse interne (21),
- une gaine interne (12), aussi appelé gaine de pression,
- une voûte de pression (22),
- une ou plusieurs couches d'armures (14, 23),
- une ou plusieurs gaine intermédiaire (non représentée),
- et la gaine externe (11).

La carcasse interne (21) est formée d'un feuillard métallique inoxydable profilé et enroulé à pas court pour former des spires agrafées entre elles. La fonction principale de la carcasse interne (21) est la reprise des efforts radiaux d'écrasement, par exemple ceux liés à la pression hydrostatique ou ceux exercés par des équipements externes, notamment lors de l'installation en mer de la conduite flexible. Une conduite flexible comprenant une carcasse interne (21) est dite « à passage non lisse » (« rough bore » en langue anglaise) du fait de la géométrie de ladite carcasse interne.

Cependant, la présente invention pourrait aussi s'appliquer à une conduite flexible ne comportant pas de carcasse interne, une telle conduite étant dite « à passage lisse » (« smooth bore » en langue anglaise), car sa première couche en partant de l'intérieur est la gaine interne (12), cette dernière ayant la forme d'un tube présentant une paroi intérieure lisse.

La gaine interne (12) se présente sous la forme d'un tube souple de section circulaire, éventuellement ovale. La gaine interne (12) a pour fonction le confinement de l'hydrocarbure circulant à l'intérieur de la conduite flexible, la carcasse interne (21) n'étant pas étanche. Le matériau polymère formant la gaine interne (12) est choisi en fonction notamment de la composition chimique, de la température et de la pression de l'hydrocarbure que doit transporter la conduite flexible. Les polymères les plus utilisés pour réaliser la gaine interne (12) sont les polyamides, le polyéthylène réticulé et les polymères fluorés à base de fluorure de vinylidène, et notamment ceux à base de polyfluorure de vinylidène (PVDF). La gaine interne (12) a généralement une épaisseur pouvant varier de 2 mm à 20 mm. La gaine interne (12) est généralement obtenue par extrusion. La gaine externe (11) et la gaine interne (12) sont généralement agencées coaxialement. On entend par « coaxialement » au sens de l'invention le fait que deux éléments tubulaires sont coaxiaux aux défauts de fabrication près, c'est-à-dire que ces deux éléments tubulaires sont réputés coaxiaux même s'il existe un écart entre leurs axes inférieur à 10 mm. La gaine externe (11) et la gaine interne (12) délimitent alors entre elles l'espace annulaire (13).

La voûte de pression (22) est constituée d'un ou plusieurs fils métalliques présentant une section transverse en forme de Z, de T, de C, de X, ou de K, le ou lesdits fils étant enroulés hélicoïdalement à pas court, c'est-à-dire avec un angle d'hélice proche de 90°, et agrafés entre eux. La voûte de pression (22) a pour fonction principale la reprise des efforts radiaux liés à la pression de l'hydrocarbure circulant dans la conduite, la gaine interne (12) n'étant pas capable de supporter à elle seule une pression élevée et devant donc être supportée par ladite voûte de pression (22).

Le dispositif (100) de contrôle non destructif de la ligne flexible (10) est destiné à être au moins partiellement immergé dans l'étendue d'eau (4) pour effectuer le contrôle de ladite ligne flexible (10).

Comme schématisé sur les figures 3 à 5, le dispositif (100) de contrôle non destructif de la ligne flexible (10) comprend un générateur de champ électromagnétique configuré pour générer un champ électromagnétique s'étendant au travers d'au moins une partie de l'espace annulaire (13). Ainsi, un ensemble formé d'armures (15) et du fluide est soumis audit champ électromagnétique.

Le générateur de champ électromagnétique peut comprendre au moins un couple d'électrodes (101, 102, 103, 104). Ainsi, le générateur de champ électromagnétique peut comprendre un unique couple d'électrodes (101, 102), ou deux couples d'électrodes (101, 102, 103, 104) ou plus de deux couples d'électrodes. Les électrodes (101, 102, 103, 104) sont destinées à être agencées au voisinage de la gaine externe (11) de la ligne flexible (10). On entend par « voisinage » le fait que la distance séparant les électrodes (101, 102, 103, 104) de la gaine externe (11) est au moins inférieure au rayon de la ligne flexible (10). Avantageusement, la distance séparant les électrodes (101, 102, 103, 104) de la gaine externe (11) est inférieure à 100 mm, préférentiellement inférieure à 20 mm. Selon un mode préféré de réalisation, les électrodes (101, 102, 103, 104) sont destinées à être agencées en contact avec la gaine externe (11). On entend par « au contact » au sens de l'invention le fait qu'il existe au moins un point de contact entre les électrodes (101, 102, 103, 104) et la gaine externe (11). Les électrodes (101, 102, 103, 104) sont ainsi destinées à être immergées dans l'étendue d'eau (4) pour effectuer le contrôle de la ligne flexible (10).

Chaque électrode (101, 102, 103, 104) peut comprendre un corps conducteur. De manière avantageuse, le corps conducteur d'une, de plusieurs, ou de toutes les électrodes (101, 102, 103, 104) peut être réalisé en métal, préférentiellement en cuivre, en argent ou en or. Le corps conducteur de chacune des électrodes (101, 102, 103, 104) peut avoir une forme circulaire, hexagonale, rectangulaire, carrée, de losange, ou toute autre forme convenant à l'homme du métier et préférentiellement de dimensions comprises entre 20 mm et 250 mm. Le corps conducteur des électrodes (101, 102, 103, 104) a avantageusement une forme parallélépipédique de base rectangulaire dont la longueur et la largeur sont comprises entre 20 mm et 250 mm, préférentiellement de base carrée de côtés égaux à 70 mm. Le corps conducteur de chaque électrodes (101, 102, 103, 104) a une épaisseur généralement comprise entre 0.1 mm et 5 mm. Le corps conducteur de chaque électrode (101, 102, 103, 104) peut comprendre une face avant destinée à être en vis-à-vis de la ligne flexible (10) à contrôler. Chaque électrode (101, 102, 103, 104) peut comprendre un revêtement de protection contre la corrosion agencé sur la face avant du corps conducteur de ladite électrode (101, 102, 103, 104). Ce revêtement de protection contre la corrosion peut être réalisé avec un matériau isolant électriquement et amagnétique tel que par exemple un matériau polymère. Ce revêtement de protection contre la corrosion peut avoir une épaisseur comprise entre 1 mm et 5 mm. En alternative, ou en sus du revêtement de protection contre la corrosion, chaque électrode (101, 102, 103, 104) peut comprendre un revêtement élastomérique configuré pour chasser l'eau entre ladite électrode et la gaine externe (11) de la ligne flexible (10) lorsque ladite électrode entre en contact avec ladite gaine externe. Le revêtement élastomérique peut avoir une épaisseur comprise entre 1 mm et 5 mm. Le corps conducteur de chaque électrode (101, 102, 103, 104) peut également comprendre une face arrière opposée à la face avant. Le corps conducteur de chaque électrode (101, 102, 103, 104) peut enfin comprendre une ou plusieurs faces latérales joignant la face avant de la face arrière. Avantageusement, les électrodes (101, 102, 103, 104) du ou de chacun des couples d'électrodes sont séparées par une distance fixe, notamment au cours de la mesure. En particulier, la distance séparant les électrodes (101, 102, 103, 104) du ou de chacun des couples d'électrodes peut être comprise entre 200 mm et 500 mm. Les électrodes (101, 102, 103, 104) peuvent être montées sur un véhicule télécommandé (« remotely operated vehicle » en langue anglaise, souvent abrégé ROV) de manière à pouvoir facilement opérer le dispositif (100) de contrôle non destructif de la ligne flexible (10) au sein de l'étendue d'eau. Les électrodes peuvent également être monté sur un collier de serrage, notamment à l'intérieur des patins dudit collier de serrage, ou encore sur tout moyen d'accroche et/ou de déplacement sur une ligne flexible (10) connu de l'homme du métier.

Chaque électrode (101, 102, 103, 104) peut comprendre un moyen d'isolation électrique avec le milieu environnant, en particulier l'eau de l'étendue d'eau (4), de manière à éviter la création d'un rebouclage du champ électromagnétique entre lesdites électrodes (101, 102, 103, 104), par la face arrière de leurs corps conducteurs, à travers l'eau de l'étendue d'eau. En particulier, le moyen d'isolation électrique peut se présenter sous la forme d'un revêtement isolant électriquement agencé sur la face arrière et la ou les faces latérales du corps conducteur de l'électrode (101, 102, 103, 104). On entend par « isolant électriquement » le fait que le matériau utilisé a une résistivité supérieure à 10⁹ Ω.m. Ce revêtement isolant électriquement peut être réalisé en résine ou en mousse syntactique. Le revêtement à une épaisseur généralement comprise entre 10 mm et 30 mm, voire plus. Le moyen d'isolation peut également se présenter sous la forme d'une cloche entourant la face arrière et la ou les parties faces de l'électrode (101, 102, 103, 104). La cloche peut être réalisée en résine, ou en mousse syntactique. La cloche a une épaisseur généralement comprise entre 20 mm et 30 mm, voire plus.

Le générateur de champ électromagnétique peut également comprendre un générateur (105) de tension ou alternativement un générateur de courant. Le générateur (105) de tension, respectivement de courant, est configurer pour fournir une tension variable, ou un courant variable. La tension variable, respectivement courant variable, est notamment du type alternatif, sinusoïdal, carré, triangulaire ou pulsé.

Lorsque le générateur de champ électromagnétique comprend un unique couple d'électrodes (101, 102), le générateur (105) de tension est configuré pour alimenter en tension alternative de fréquence déterminée ledit couple d'électrodes (101, 102) de manière à générer un champ électromagnétique s'étendant au travers d'au moins une partie de l'espace annulaire (13) de ladite ligne flexible (10). Ainsi, un ensemble formé d'armures (15) et du fluide est soumis audit champ électromagnétique. De façon alternative, le générateur (105) de courant est configuré pour alimenter en courant alternatif de fréquence déterminée ledit couple d'électrodes (101, 102) de manière à générer un champ électromagnétique s'étendant au travers d'au moins une partie de l'espace annulaire (13) de ladite ligne flexible (10). Ainsi, un ensemble formé d'armures (15) et du fluide est soumis audit champ électromagnétique. De façon encore alternative le générateur (105) de tension est configuré pour alimenter en tension pulsée ledit couple d'électrodes (101, 102) de manière à générer un champ électromagnétique s'étendant au travers d'au moins une partie de l'espace annulaire (13) de ladite ligne flexible (10). Ainsi, un ensemble formé d'armures (15) et du fluide est soumis audit champ électromagnétique. De façon encore alternative, le générateur (105) de courant est configuré pour alimenter en courant pulsé ledit couple d'électrodes (101, 102) de manière à générer un champ électromagnétique s'étendant au travers d'au moins une partie de l'espace annulaire (13) de ladite ligne flexible (10). Ainsi, un ensemble formé d'armures (15) et du fluide est soumis audit champ électromagnétique.

Lorsque générateur de champ électromagnétique comprend plusieurs couples d'électrodes (101, 102, 103, 104), le générateur (105) de tension est configuré pour alimenter en tension alternative de fréquence déterminée le premier couple d'électrodes (101, 102) de manière à générer un champ électromagnétique s'étendant au travers d'au moins une partie de l'espace annulaire (13) de ladite ligne flexible (10). Ainsi, un ensemble formé d'armures (15) et du fluide est soumis audit champ électromagnétique. De façon alternative, le générateur (105) de courant est configuré pour alimenter en courant alternatif de fréquence déterminée le premier couple d'électrodes (101, 102) de manière à générer un champ électromagnétique s'étendant au travers d'au moins une partie de l'espace annulaire (13) de ladite ligne flexible (10). Ainsi, un ensemble formé d'armures (15) et du fluide est soumis audit champ électromagnétique. De façon encore alternative, le générateur (105) de tension est configuré pour alimenter en tension pulsée le premier couple d'électrodes (101, 102) de manière à générer un champ électromagnétique s'étendant au travers d'au moins une partie de l'espace annulaire (13) de ladite ligne flexible (10). Ainsi, un ensemble formé d'armures (15) et du fluide est soumis audit champ électromagnétique. De façon encore alternative, le générateur (105) de courant est configuré pour alimenter en courant pulsé le premier couple d'électrodes (101, 102) de manière à générer un champ électromagnétique s'étendant au travers d'au moins une partie de l'espace annulaire (13) de ladite ligne flexible (10). Ainsi, un ensemble formé d'armures (15) et du fluide est soumis audit champ électromagnétique.

A cet effet, le générateur (105) de tension, ou alternativement de courant, peut comprendre des moyens de connexion électrique aux électrodes (101, 102, 103, 104) à alimenter en tension, ou alternativement en courant, ou en tension pulsée, ou en courant pulsé. Chaque moyen de connexion peut se présenter sous la forme d'un câble électrique dont l'une des extrémités est soudée sur l'électrode (101, 102, 103, 104), ou encore équipée d'un connecteur électrique coopérant avec un connecteur électrique correspondant agencé sur l'électrode (101, 102, 103, 104). A ce titre le générateur (105) de tension, ou alternativement de courant, peut être immergé et agencé dans un caisson étanche à proximité du ou des couples d'électrodes (101, 102, 103, 104) ou être en grande partie déporté vers l'ensemble de surface (2) ou un bateau, seuls les moyens de connexion s'étendant dudit ensemble de surface (2) ou dudit bateau vers les électrodes (101, 102, 103, 104) étant au moins partiellement immergés. Le générateur (105) de tension est configuré pour alimenter en tension alternative, ou en courant alternatif, de fréquence déterminée comprise entre 10 Hz et 10 MHz, avantageusement comprise entre 100 kHz et 3 MHz, préférentiellement compris entre 200 kHz et 800 kHz. Le générateur (105) de tension est configuré pour délivrer une tension alternative d'amplitude comprise entre 1 mV et 10 V, préférentiellement comprise entre 100 mV et 1V.

Le dispositif (100) de contrôle non destructif d'une ligne flexible (10) comprend aussi un instrument de mesure (106).

Lorsque générateur de champ électromagnétique comprend un unique couple d'électrodes (101, 102), l'instrument de mesure est configuré pour mesurer, au niveau dudit couple d'électrodes (101, 102), un signal électrique lié aux caractéristiques électromagnétiques de ladite au moins une partie de l'espace annulaire (13) soumise audit champ électromagnétique généré.

Lorsque générateur de champ électromagnétique comprend plusieurs couples d'électrodes (101, 102, 103, 104), l'instrument de mesure est configuré pour mesurer, au niveau d'un deuxième couple d'électrodes (103, 104), les caractéristiques électromagnétiques de ladite au moins une partie de l'espace annulaire (13) soumise audit champ électromagnétique généré.

A cet effet, l'instrument de mesure (106) peut comprendre des moyens de connexion électrique aux électrodes (101, 102, 103, 104) sur lesquelles la mesure doit être effectuée. En particulier, le signal électrique mesuré peut être un signal complexe, le module dudit signal complexe étant égal à l'amplitude de la tension mesurée aux bornes du deuxième couple d'électrodes (103, 104), et la phase dudit signal complexe étant égale au déphasage mesuré entre d'une part la tension aux bornes du deuxième couple d'électrodes (103, 104) et d'autre part la tension ou le courant alimentant le premier couple d'électrodes (101, 102). Chaque moyen de connexion peut se présenter sous la forme d'un câble électrique dont l'une des extrémités est soudée sur l'électrode (101, 102, 103, 104), ou encore équipée d'un connecteur électrique coopérant avec un connecteur électrique correspondant agencé sur l'électrode (101, 102, 103, 104). A ce titre l'instrument de mesure (106) peut être immergé et agencé dans un caisson étanche à proximité du ou des couples d'électrodes (101, 102, 103, 104) ou être en grande partie déporté vers l'ensemble de surface (2) ou un bateau, seuls les moyens de connexion s'étendant dudit ensemble de surface (2) ou dudit bateau vers les électrodes (101, 102, 103, 104) étant au moins partiellement immergés.

Le signal électrique lié aux caractéristiques électromagnétiques peut être la tension et/ou l'intensité et/ou une impédance et/ou toute autre grandeur électrique convenant à l'homme du métier. L'instrument de mesure (106) peut comprendre un voltmètre et/ou un ampèremètre. En particulier l'instrument de mesure (106) peut être un impédancemètre, combinaison d'un voltmètre et d'un ampèremètre, qui par le rapport tension sur intensité permet de déterminer l'impédance d'un circuit électrique. L'instrument de mesure (106) est avantageusement un analyseur de réseau vectoriel.

Le dispositif (100) de contrôle non destructif de la ligne flexible (10) comprend encore un analyseur configuré pour traiter le signal électrique lié aux caractéristiques électromagnétiques mesurées de manière à déterminer la nature du fluide contenu dans l'espace annulaire (13) de ladite ligne flexible (10). Cet analyseur peut prendre la forme d'un comparateur (107) configuré pour comparer le signal électrique lié aux caractéristiques électromagnétiques mesurées avec des valeurs de référence de manière à déterminer la nature du fluide contenu dans l'espace annulaire (13) de ladite ligne flexible (10). Le comparateur (107) peut se présenter sous la forme d'un microprocesseur exécutant un morceau de programme informatique stocké dans une mémoire (108) et configuré pour déterminer à partir de la mesure du signal électrique d'entrée et de valeurs de référence stockées dans ladite mémoire (108), la nature du fluide contenu dans l'espace annulaire (13). On entend par « nature du fluide » le fait que le fluide est un gaz ou un liquide. Lorsque l'espace annulaire (13) contient au moins une phase liquide, le comparateur (107) peut également être configuré pour comparer le signal électrique mesuré avec valeurs de référence de manière à déterminer la nature de la ou des phases liquides contenues dans l'espace annulaire (13). On entend par « nature de la ou des phases liquides » le fait que le liquide est de l'eau et/ou une eau salée et/ou une huile et/ou tout autre liquide susceptible d'avoir inondé l'espace annulaire (13). Le comparateur (107) est connecté à l'instrument de mesure (106) au moyen d'un circuit électronique et/ou de câbles de données électrique ou optique et/ou d'organes de communication sans fil et/ou via tout autre moyen de connexion convenant à l'homme du métier.

Le dispositif (100) de contrôle non destructif de la ligne flexible (10) peut également comprendre un ou plusieurs moyens d'information (109) connectés au comparateur et configurés pour avertir un opérateur de la nature du fluide ou de la ou des phases liquides. Ce moyen d'information (109) peut comprendre un organe sonore configuré pour émettre un son spécifique lorsque l'espace annulaire contient au moins une phase liquide ou inversement uniquement une phase gazeuse. L'organe sonore peut également être configuré pour émettre un premier son lorsque l'espace annulaire (13) contient au moins une phase liquide et un deuxième son, différent dudit premier son, lorsque ledit espace annulaire (13) contient uniquement une phase gazeuse, ou encore un son différent par type de phase liquide. En particulier l'organe sonore peut comprendre un ou plusieurs haut-parleurs. Ce moyen d'information (109) peut, alternativement ou en combinaison, comprendre un organe lumineux configuré pour émettre un signal lumineux lorsque l'espace annulaire contient au moins une phase liquide ou inversement uniquement une phase gazeuse. L'organe lumineux peut également être configuré pour émettre un premier signal lumineux lorsque l'espace annulaire (13) contient au moins une phase liquide et un deuxième signal lumineux, différent du premier signal lumineux, lorsque ledit espace annulaire (13) contient uniquement une phase gazeuse, ou encore un signal lumineux différent par type de phase liquide. En particulier, l'organe lumineux peut comprendre un ou plusieurs voyants de type diode électroluminescentes (DEL). Ce moyen d'information (109) peut, alternativement ou en combinaison, comprendre un écran d'affichage permettant d'afficher des messages relatifs à la nature du liquide contenu dans l'espace annulaire de la ligne flexible. Le ou les moyens d'informations (109) sont généralement agencés sur l'ensemble de surface (2) ou un bateau. Le ou les moyens d'informations (109) sont connectés au comparateur (107) au moyen d'un circuit électronique et/ou de câbles de données électrique ou optique et/ou d'organe de communication sans fil et/ou ou via tout autre moyen de connexion convenant à l'homme du métier.

Le procédé de contrôle non destructif de la ligne flexible (10) selon l'invention est remarquable en ce qu'il comprend les étapes suivantes :
a) agencer au voisinage de la gaine externe (11) au moins un couple d'électrodes (101, 102, 103, 104),
b) alimenter en tension alternative de fréquence déterminée, ou en courant alternatif de fréquence déterminée, ou en tension pulsée, ou en courant pulsé, ledit couple d'électrodes (101, 102), ou un premier couple d'électrodes (101, 102) desdits couples d'électrodes (101, 102, 103, 104), de manière à générer un champ électromagnétique s'étendant au travers d'au moins une partie de l'espace annulaire (13), et ainsi, soumettre un ensemble formé d'armures (15) et du fluide audit champ électromagnétique,
c) mesurer, au niveau dudit couple d'électrodes (101, 102), ou d'un deuxième couple d'électrodes (103,104) desdits couples d'électrodes (101, 102, 103, 104), un signal électrique lié aux caractéristiques électromagnétiques de ladite au moins une partie de l'espace annulaire (13) soumise audit champ électromagnétique généré,
d) traiter ledit signal électrique de manière à déterminer la nature du fluide contenu dans l'espace annulaire (13).

De manière générale, le traitement du signal consiste à comparer ledit signal électrique avec des valeurs de référence de manière à déterminer la nature du fluide contenu dans l'espace annulaire (13). Préférentiellement, lorsque le signal électrique mesuré est un signal complexe, le traitement du signal consiste à comparer le module et/ou la phase dudit complexe avec des valeurs de référence de manière à déterminer la nature du fluide contenu dans l'espace annulaire (13).

Sous l'effet du champ électromagnétique, l'ensemble formé de la juxtaposition de deux armures (15) conductrices séparées par un interstice (16) comprenant un fluide diélectrique nettement moins conducteur que les armures (15) va se comporter comme un condensateur dont la capacité électrique dépend notamment de la permittivité diélectrique du fluide. Ainsi, la partie située entre les électrodes (101, 102, 103, 104) est alors assimilable à un réseau de condensateurs en série. Connaissant, la dimension moyenne réelle des interstices (16) il est possible de calculer de manière théorique, connaissant la conductivité électrique des armures (15) et du fluide, la valeur théorique de la capacité électrique en fonction de la nature du fluide. Ces valeurs théoriques calculées peuvent alors être stockées comme valeurs de référence dans la mémoire (108) du dispositif (100). Ainsi en comparant la valeur théorique de la capacité électrique à la mesure de la capacité électrique totale entre les électrodes (101, 102, 103, 104) au niveau desquelles est faite la mesure, il est possible de déterminer de quelle valeur théorique, la valeur mesurée est la plus proche et ainsi déterminer la nature du fluide contenu dans l'espace annulaire (13) de la ligne flexible (10).

En se rapportant à la figure 3, et selon un premier exemple de réalisation, lors de l'étape a), un unique couple d'électrodes (101, 102) est agencé au voisinage de la gaine externe (11). Dans un mode de réalisation à un unique couple d'électrode (101, 102), il est tout d'abord possible de disposer les deux électrodes (101, 102) du couple de manière alignée le long d'un même groupe d'armures. Cependant, l'écart de capacité électrique mesurable entre différentes configurations de fluide contenu dans l'espace annulaire (13) est faible, généralement de l'ordre du 1/10^{e}, et il est ainsi difficile de déterminer efficacement la nature du fluide contenu dans ledit espace annulaire (13) compte tenu des risques de parasitage de la mesure en condition réelle, notamment dus à un positionnement imparfait desdites électrodes (101, 102) par rapport à la gaine externe (11) et/ou aux armures (15). Ainsi, de manière à obtenir des mesures plus précises et une exploitation des résultats améliorée, il est préférable que l'étape a) comprenne les étapes suivantes :
a1) agencer une première électrode (101) de l'unique couple d'électrodes (101, 102) en vis-à-vis du premier groupe d'armures (17),
a2) agencer une deuxième électrode (102) de l'unique couple d'électrodes (101, 102) en vis-à-vis du deuxième groupe d'armures (18).

Dans une configuration à un unique couple d'électrodes (101, 102), la mesure effectuée à l'étape c) est alors effectuée au niveau du même couple d'électrodes (101, 102) aux bornes duquel le courant est délivré à l'étape b).

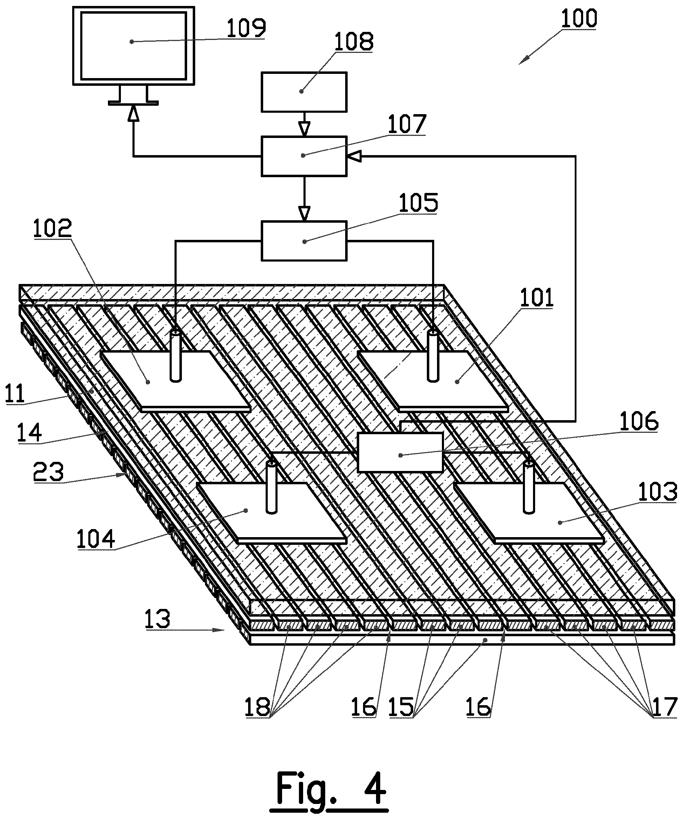

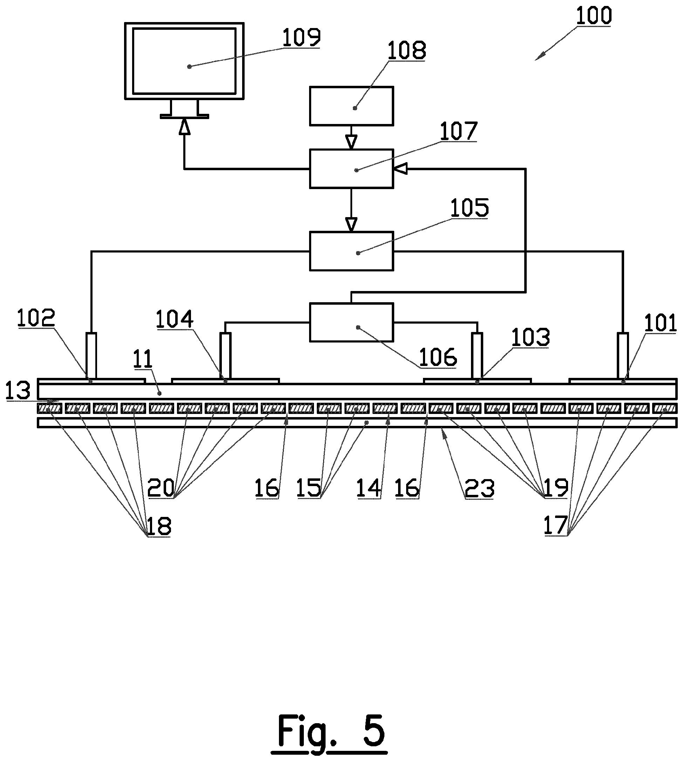

En se rapportant aux figures 4 et 5, et selon un deuxième exemple de réalisation de l'étape a), cette dernière peut comprendre l'étape a3) consistant à agencer au voisinage de la gaine externe (11) deux couples d'électrodes (101, 102, 103, 104). De façon analogue au premier exemple de réalisation de l'étape a) il est préférable d'éviter une configuration dans laquelle les électrodes (101, 102, 103, 104) sont alignées le long d'un même groupe d'armures. Ainsi, de manière à obtenir des mesures plus précises et une exploitation des résultats améliorée, il est préférable que l'étape a) comprenne les étapes suivantes :
a3) agencer une première électrode (101) du premier couple d'électrodes (101, 102) en vis-à-vis du premier groupe d'armures (17),
a4) agencer une deuxième électrode (102) du premier couple d'électrodes (101, 102) en vis-à-vis du deuxième groupe d'armures (18).

Comme représenté à la figure 4, dans une première variante du deuxième exemple de réalisation de l'étape a), cette dernière peut comprendre les étapes suivantes :
a5) agencer une première électrode (103) du deuxième couple d'électrodes (103, 104) en vis-à-vis du premier groupe d'armures (17),
a6) agencer une deuxième électrode (104) du deuxième couple d'électrodes (103, 104) en vis-à-vis du deuxième groupe d'armures (18).

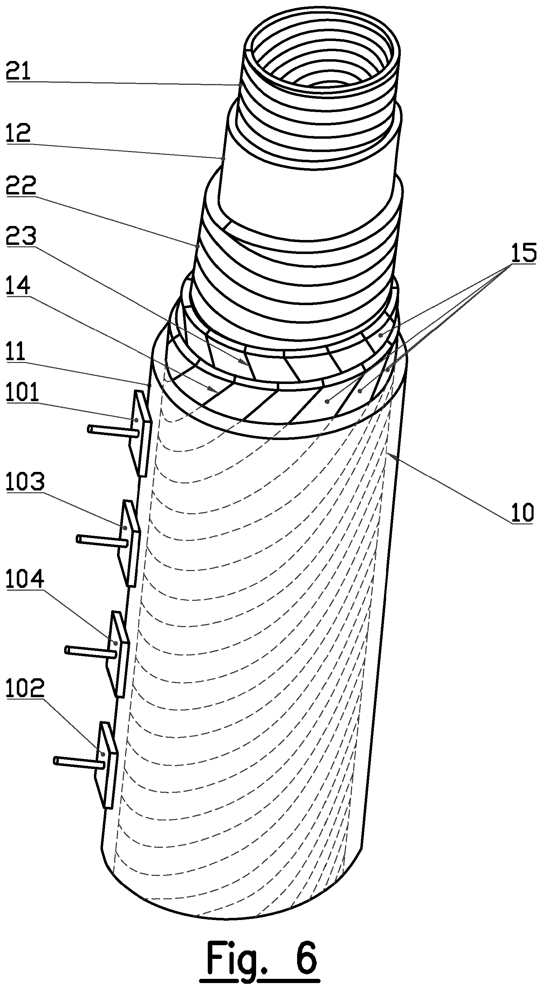

Comme représenté sur les figures 5 et 6, dans une deuxième variante du deuxième exemple de réalisation de l'étape a), cette dernière peut comprendre les étapes suivantes :
a7) agencer une première électrode (103) du deuxième couple d'électrodes (103, 104) en vis-à-vis du troisième groupe d'armures (19),
a8) agencer une deuxième électrode (104) du deuxième couple d'électrodes (103, 104) en vis-à-vis du quatrième groupe d'armures (20).

Dans une configuration à deux couples d'électrode (101, 102, 103, 104) la mesure effectuée à l'étape c) est alors effectuée au niveau d'un deuxième couple d'électrodes (103, 104) différent du premier couple d'électrodes (101, 102) alimenté en tension alternative, ou en courant alternatif, ou en tension pulsée, on ou en courant pulsé.

D'autres variantes à plus de deux couples d'électrodes pourraient également être imaginées par l'homme du métier sans dénaturer l'essence même de l'invention.

En pratique, quel que soit l'exemple ou la variante de réalisation choisie pour le nombre de couples d'électrodes (101, 102, 103, 104), et comme évoqué précédemment, chaque groupe d'amures (17, 18, 19, 20) peut comprendre entre 2 et 6 armures, éventuellement plus. De manière à obtenir des mesures et une exploitation des résultats optimale, il est préférable que la somme des largeurs des armures (15) du groupe d'armure (17, 18, 19, 20) soit au moins égale à la largeur de l'électrode (101, 102, 103, 104) qui est agencé en vis-à-vis.

En pratique, et quel que soit l'exemple ou la variante de réalisation choisi pour le nombre de couples d'électrodes (101, 102, 103, 104), pour obtenir une mesure exploitable, il est suffisant que les électrodes (101, 102, 103, 104) soient agencées au voisinage de la gaine externe (11) de la ligne flexible (10), c'est-à-dire à une distance au moins inférieure au rayon de ladite ligne flexible (10). Pour autant la précision de la mesure et l'exploitation des résultats s'améliorent d'autant que les électrodes (101, 102, 103, 104) sont proches de la gaine externe (11). Avantageusement, la distance séparant les électrodes (101, 102, 103, 104) de la gaine externe (11) est inférieure à 100 mm, préférentiellement inférieure à 20 mm. Dans un mode d'agencement optimal, l'étape a) peut comprendre l'étape a9) consistant à agencer les électrodes (101, 102, 103, 104) du au moins un couple d'électrodes (101, 102, 103, 104) en contact avec la gaine externe (11).

Toujours dans un souci d'optimisation de la méthode, l'étape b) peut comprendre l'étape b1) consistant à alimenter en tension alternative, ou en courant alternatif, de fréquence déterminée comprise entre 10 Hz et 10 MHz, avantageusement comprise entre 100 kHz et 3 MHz, préférentiellement comprise entre 200 kHz et 800 kHz. La sélection de ces gammes de fréquence permet d'assurer une meilleure pénétration du champ électromagnétique à travers la gaine externe (11) et l'espace annulaire (13). En outre la sélection de cette gamme de fréquence permet de bien distinguer entre eux le premier cas où le fluide est de l'air (espace annulaire sec), du deuxième cas où le fluide est de l'eau douce ayant lentement diffusé à travers la gaine interne (annulaire inondé par diffusion depuis l'intérieur de la conduite), et du troisième cas où le fluide est de l'eau salée (annulaire inondé par de l'eau de mer en raison probablement d'une perte d'étanchéité de la gaine externe). La distinction entre l'air et l'eau douce repose principalement sur la différence entre les permittivités diélectriques de l'air et de l'eau, différence notamment liée à la polarité importante des molécules d'eau. La distinction entre l"eau douce et l'eau salée repose quant à elle principalement sur la différence de conductivité électrique. La sélection de la gamme de fréquence précitée permet d'exploiter au mieux ces différences de propriétés électromagnétiques de façon simple et fiable.

L'étape b) peut également comprendre une ou plusieurs étapes supplémentaires, effectuées simultanément ou de manière séquentielle, et consistant à alimenter en tension alternative, ou en courant alternatif, de fréquence déterminée distincte des autres fréquences déterminées de l'étape b) ou desdites étapes supplémentaires. On parle alors de balayage en fréquence. En pratique, lorsque l'on effectue un balayage en fréquence, le groupe d'étapes b), c) et d) est exécuté plusieurs fois, simultanément ou séquentiellement, avec pour chaque exécution une fréquence déterminée différente. Le fait de faire plusieurs mesures différentes en faisant varier la fréquence déterminée de la tension alternative ou du courant alternatif d'alimentation permet d'améliorer la détermination du fluide contenu dans l'espace annulaire (13).

Comme évoqué précédemment, et compte tenu du comportement de l'ensemble formé par les armures (15) et le fluide contenu dans l'espace annulaire (13), lorsque ledit ensemble est soumis à un champ électromagnétique, le signal lié aux caractéristiques électromagnétiques de l'espace annulaire qu'il peut être intéressant de mesurer est la capacité électrique entre fils d'armures. Cependant, il peut s'avérer complexe d'en effectuer une mesure directe. Ainsi, il peut être judicieux de passer par la mesure d'autres signaux électriques permettant d'obtenir ensuite par le calcul la valeur de la capacité électrique via des modèles et théories physiques standards. D'une autre manière il est aussi possible, connaissant la capacité électrique théorique, de déduire d'autres caractéristiques électriques théoriques telles que la tension théorique, l'intensité théorique, l'impédance théorique ou encore la transmittance théorique, et de prendre ces valeurs théoriques comme valeurs de référence afin de les comparer directement au signal électrique mesurées, à savoir la tension mesurée, l'intensité mesurée, l'impédance mesurée ou encore la transmittance mesurée. De manière alternative ou complémentaire, les valeurs de références peuvent également obtenue par des mesures réalisées en laboratoire sur des échantillons de ligne flexible (10). Des exemples de courbes de valeurs de références obtenues en laboratoire sont représentées sur les figures 7 à 10. Ainsi, l'étape c) peut comprendre une étape consistant à mesurer la tension aux bornes de l'unique couple d'électrodes (101, 102) ou du deuxième couple d'électrodes (103, 104) et/ou une étape consistant à mesurer l'intensité qui circule à travers les électrodes dudit unique couple d'électrodes (101, 102) ou dudit deuxième couple d'électrodes (103, 104). De façon alternative ou en combinaison, l'étape c) peut également comprendre l'étape c1) consistant à mesurer l'impédance aux bornes de l'unique couple d'électrodes (101, 102), ou la transmittance entre le premier couple d'électrodes (101, 102) et le deuxième couple d'électrodes (103, 104). L'impédance et la transmittance sont des signaux complexes. Dans le cas où l'impédance est mesurée, l'étape d) peut comprendre l'étape d1) consistant à comparer l'impédance mesurée aux bornes de l'unique couple d'électrodes (101, 102) avec une impédance de référence aux bornes de l'unique couple d'électrodes (101, 102) de manière à déterminer la nature du fluide contenu dans l'espace annulaire (13) de la ligne flexible (10). Dans le cas où la transmittance est mesurée, l'étape d) peut comprendre l'étape d1) consistant à comparer la transmittance entre le premier couple d'électrodes (101, 102) et le deuxième couple d'électrodes (103, 104), avec une transmittance de référence entre le premier couple d'électrodes (101, 102) et le deuxième couple d'électrodes (103, 104), de manière à déterminer la nature du fluide contenu dans l'espace annulaire (13) de la ligne flexible (10). En pratique, le comparateur compare le module et/ou la phase et/ou la partie imaginaire et/ou la partie réelle du signal électrique mesuré avec des valeurs de référence de manière à déterminer la nature du fluide contenu dans l'espace annulaire (13).

Lorsqu'un balayage en fréquence est réalisé au niveau de l'étape b), et lorsque le signal électrique mesuré pour chaque fréquence déterminée est un signal complexe du type impédance complexe ou du type transmittance complexe, les signaux complexes mesurés peuvent être représentés et traités de différentes manières illustrées par les figures 7 à 10.

En référence à la figure 7, la courbe (31) en trait plein représente le module (M) des signaux complexes mesurés en fonction de la fréquence (F), dans le cas où l'espace annulaire (13) de la ligne flexible est totalement inondé d'eau. La courbe (32) en trait interrompu représente les valeurs de référence du module (M) du signal complexe en fonction de la fréquence déterminée (F), correspondant au cas où l'espace annulaire de la ligne flexible contient un gaz. La courbe (32) des valeurs de référence du module (M) est notamment déterminée lors d'un étalonnage du dispositif de contrôle qui est effectué sur un tronçon de ligne flexible dont l'annulaire est sec et rempli uniquement de gaz, typiquement rempli d'air. La comparaison de la courbe (31) du module (M) des signaux complexes mesurés lors d'un contrôle d'une ligne flexible dont l'espace annulaire est rempli d'un fluide de nature inconnue, avec la courbe (32) des valeurs de référence du module (M) correspondant à un espace annulaire rempli de gaz, permet de déterminer la nature du fluide présent dans cet espace annulaire, et elle permet notamment de déterminer si ce fluide est un gaz ou bien de l'eau douce ou bien de l'eau de mer.

En référence à la figure 8, la courbe (41) en trait plein représente la phase (P) des signaux complexes mesurés en fonction de la fréquence (F), dans le cas où l'espace annulaire (13) de la ligne flexible est totalement inondé d'eau. La courbe (42) en trait interrompu représente les valeurs de référence de la phase (P) du signal complexe en fonction de la fréquence déterminée (F), correspondant au cas où l'espace annulaire de la ligne flexible contient un gaz. La courbe (42) des valeurs de référence de la phase (P) est notamment déterminée lors d'un étalonnage du dispositif de contrôle qui est effectué sur un tronçon de ligne flexible dont l'annulaire est sec et rempli uniquement de gaz, typiquement rempli d'air. La comparaison de la courbe (41) de la phase (P) des signaux complexes mesurés lors d'un contrôle d'une ligne flexible dont l'espace annulaire est rempli d'un fluide de nature inconnue, avec la courbe (42) des valeurs de référence de la phase (P) correspondant à un espace annulaire rempli de gaz, permet de déterminer la nature du fluide présent dans cet espace annulaire, et elle permet notamment de déterminer si ce fluide est un gaz ou bien de l'eau douce ou bien de l'eau de mer.

Les courbes représentant le module (M) et la phase (P) des signaux complexes en fonction de la fréquence (F) sont avantageusement utilisées ensemble lors de l'étape d) de comparaison avec des valeurs de référence.

En référence à la figure 9, la courbe (51) en trait plein représente la partie réelle (Re) des signaux complexes mesurés en fonction de la fréquence (F), dans le cas où l'espace annulaire (13) de la ligne flexible est totalement inondé d'eau. La courbe (52) en trait interrompu représente les valeurs de référence de la partie réelle (Re) du signal complexe en fonction de la fréquence déterminée (F), correspondant au cas où l'espace annulaire de la ligne flexible contient un gaz. La courbe (52) des valeurs de référence de la partie réelle (Re) est notamment déterminée lors d'un étalonnage du dispositif de contrôle qui est effectué sur un tronçon de ligne flexible dont l'annulaire est sec et rempli uniquement de gaz, typiquement rempli d'air. La comparaison de la courbe (51) de la partie réelle (Re) des signaux complexes mesurés lors d'un contrôle d'une ligne flexible dont l'espace annulaire est rempli d'un fluide de nature inconnue, avec la courbe (52) des valeurs de référence de la partie réelle (Re) correspondant à un espace annulaire rempli de gaz, permet de déterminer la nature du fluide présent dans cet espace annulaire, et elle permet notamment de déterminer si ce fluide est un gaz ou bien de l'eau douce ou bien de l'eau de mer.

En référence à la figure 10, la courbe (61) en trait plein représente la partie imaginaire (Im) des signaux complexes mesurés en fonction de la fréquence (F), dans le cas où l'espace annulaire (13) de la ligne flexible est totalement inondé d'eau. La courbe (62) en trait interrompu représente les valeurs de référence de la partie imaginaire (Im) du signal complexe en fonction de la fréquence déterminée (F), correspondant au cas où l'espace annulaire de la ligne flexible contient un gaz. La courbe (62) des valeurs de référence de la partie imaginaire (Im) est notamment déterminée lors d'un étalonnage du dispositif de contrôle qui est effectué sur un tronçon de ligne flexible dont l'annulaire est sec et rempli uniquement de gaz, typiquement rempli d'air. La comparaison de la courbe (61) de la partie imaginaire (Im) des signaux complexes mesurés lors d'un contrôle d'une ligne flexible dont l'espace annulaire est rempli d'un fluide de nature inconnue, avec la courbe (62) des valeurs de référence de la partie imaginaire (Im) correspondant à un espace annulaire rempli de gaz, permet de déterminer la nature du fluide présent dans cet espace annulaire, et elle permet notamment de déterminer si ce fluide est un gaz ou bien de l'eau douce ou bien de l'eau de mer.

Les courbes représentant la partie réelle (Re) et la partie imaginaire (Im) des signaux complexes en fonction de la fréquence (F) sont avantageusement utilisées ensemble lors de l'étape d) de comparaison avec des valeurs de référence.

En outre, les courbes représentant le module (M) et/ou la phase (P) et/ou la partie réelle (Re) et/ou la partie imaginaire (Im) des signaux complexes mesurés en fonction de la fréquence (F), présentent généralement au moins un pic de résonance, notamment lorsque le balayage en fréquence couvre des fréquences déterminées variant entre 10 Hz et 10 MHz, avantageusement entre 1kHz et 5 MHz, préférentiellement entre 100 kHz et 3 MHz. Ce phénomène de résonance électrique est notamment lié aux inductances des câbles électriques reliant les électrodes à l'appareil de mesure d'impédance ou de transmittance. En effet, une paire d'électrodes est globalement assimilable à une capacité (condensateur) et lorsqu'elle est branchée en parallèle à une inductance (ici celle du câble) on obtient un circuit résonant dont la fréquence de résonance est inversement proportionnelle à la racine carrée du produit de la capacité par l'inductance. De plus, il a été découvert que la fréquence de résonance d'un pic de résonance varie en fonction de la nature du fluide contenu dans l'espace annulaire de la ligne flexible, la fréquence de résonance en présence d'un annulaire rempli d'eau étant nettement inférieure à cette en présence d'un annulaire rempli de gaz. Ce phénomène est cohérent avec le fait que l'eau a une permittivité électrique nettement supérieure à celle des gaz et notamment de l'air, si bien que la capacité aux bornes d'une paire d'électrodes augmente significativement lorsque l'annulaire est inondé, ce qui a pour effet d'abaisser la fréquence de résonance.

L'inondation de l'annulaire d'une ligne flexible peut donc être détectée en comparant la fréquence de résonance d'un pic de résonance avec une valeur de référence déterminée lors d'un étalonnage sur une ligne flexible comportant un annulaire rempli de gaz. En référence aux figures 7 à 10, la fréquence de résonance d'un pic de résonance (33, 43, 53, 63) est mesurée sur l'une au moins des courbes représentant le module (M) et/ou la phase (P) et/ou le partie réelle (Re) et/ou la partie imaginaire (Im) des signaux complexes mesurés en fonction de la fréquence (F). Ensuite, cette fréquence de résonance mesurée est comparée avec une valeur de référence qui est la fréquence de résonance du pic de résonance (34, 44, 54, 64) déterminée sur l'une au moins des courbes de référence (32, 42, 52, 62), ce qui permet de déterminer le décalage fréquentiel (D) qui est égal à la différence entre d'une part la fréquence de résonance de référence et d'autre part la fréquence de résonance mesurée. En pratique, lorsque l'espace annulaire contient un gaz, le décalage fréquentiel (D) est faible, c'est-à-dire généralement inférieur à 1 kHz. Au contraire, lorsque l'espace annulaire contient un liquide, notamment de l'eau, le décalage fréquentiel (D) est important, c'est-à-dire généralement supérieur à 5 kHz.

Egalement et de manière à obtenir des mesures et une exploitation des résultats optimales, il peut être préférable d'effectuer une mesure de manière statique. Ainsi, lors des étapes b) et c) il est préférable de maintenir constante la distance séparant les électrodes (101, 102, 103, 104) du ou de chacun des couples d'électrodes (101, 102, 103, 104). Cette distance est avantageusement comprise entre 200 mm et 500 mm. Ceci permet alors de s'assurer qu'il existe un nombre suffisant d'armures (15) agencées entre les électrodes (101, 102, 103, 104) du ou de chacun des couples d'électrodes (101, 102, 103, 104) pour que la mesure soit optimale, généralement entre 8 et 20 armures.

## Revendications

1. Procédé de contrôle non destructif d'une ligne flexible (10) au moins partiellement immergée dans une étendue d'eau, la ligne flexible (10) comprenant au moins une couche d'armures (15) agencée à l'intérieur d'un espace annulaire (13) et une gaine externe (11) entourant ledit espace annulaire (13), ledit espace annulaire (13) comprenant un fluide, **caractérisé en ce que** le procédé est un procédé de contrôle non destructif d'une ligne flexible comprenant une gaine externe (11) réalisée en polymère, le procédé comprenant les étapes suivantes :
a) agencer, à l'extérieur de ladite ligne flexible (10), au voisinage de la gaine externe (11) au moins un couple d'électrodes (101, 102, 103, 104), les électrodes (101, 102, 103, 104) étant immergées dans l'étendue d'eau,
b) alimenter en tension alternative de fréquence déterminée, ou en courant alternatif de fréquence déterminée, ou en tension pulsée, ou en courant pulsé, ledit couple d'électrodes (101, 102), ou un premier couple d'électrodes (101, 102) desdits couples d'électrodes (101, 102, 103, 104), de manière à générer un champ électromagnétique s'étendant au travers d'au moins une partie de l'espace annulaire (13) et à soumettre audit champ électromagnétique un ensemble formé d'armures (15) et du fluide,
c) mesurer, au niveau dudit couple d'électrodes (101, 102), ou d'un deuxième couple d'électrodes (103, 104) desdits couples d'électrodes (101, 102, 103, 104), un signal électrique lié aux caractéristiques électromagnétiques de ladite au moins une partie de l'espace annulaire (13) soumise audit champ électromagnétique généré,
d) comparer ledit signal électrique avec des valeurs de référence de manière à déterminer si le fluide contenu dans l'espace annulaire (13) est un gaz ou un liquide, notamment de manière à déterminer si le fluide est un gaz ou bien de l'eau douce ou bien de l'eau de mer.

2. Procédé de contrôle non destructif d'une ligne flexible (10) selon la revendication 1 **caractérisé en ce que** lors de l'étape a) un unique couple d'électrodes (101, 102) est agencé au voisinage de la gaine externe (11).

3. Procédé de contrôle non destructif d'une ligne flexible (10) selon la revendication 2 **caractérisé en ce que** l'unique couche d'armures (14), ou lorsque la ligne flexible (10) comprend plusieurs couches d'armures (14, 23) la couche d'armures (14) la plus proche de la gaine externe (11), comprend au moins un premier groupe d'armures (17) et un deuxième groupe d'armures (18) distincts l'un de l'autre **et en ce que** l'étape a) comprend les étapes suivantes :
a1) agencer une première électrode (101) de l'unique couple d'électrodes (101, 102) en vis-à-vis du premier groupe d'armures (17),
a2) agencer une deuxième électrode (102) de l'unique couple d'électrodes (101, 102) en vis-à-vis du deuxième groupe d'armures (18).

4. Procédé de contrôle non destructif d'une ligne flexible (10) selon la revendication 1 **caractérisé en ce que** lors de l'étape a) deux couples d'électrodes (101, 102, 103, 104) sont agencés au voisinage de la gaine externe (11), à savoir d'une part un premier couple d'électrodes (101, 102) et d'autre part un deuxième couple d'électrodes (103, 104).

5. Procédé de contrôle non destructif d'une ligne flexible (10) selon la revendication 4 **caractérisé en ce que** l'unique couche d'armures (14), ou lorsque la ligne flexible (10) comprend plusieurs couches d'armures (14, 23) la couche d'armures (14) la plus proche de la gaine externe (11), comprend au moins un premier groupe d'armures (17) et un deuxième groupe d'armures (18) distincts l'un de l'autre **et en ce que** l'étape a) comprend les étapes suivantes :
a3) agencer une première électrode (101) du premier couple d'électrodes (101, 102) en vis-à-vis du premier groupe d'armures (17),
a4) agencer une deuxième électrode (102) du premier couple d'électrodes (101, 102) en vis-à-vis du deuxième groupe d'armures (18).

6. Procédé de contrôle non destructif d'une ligne flexible (10) selon la revendication 5 **caractérisé en ce que** l'étape a) comprend les étapes suivantes :
a5) agencer une première électrode (103) du deuxième couple d'électrodes (103, 104) en vis-à-vis du premier groupe d'armures (17),
a6) agencer une deuxième électrode (104) du deuxième couple d'électrodes (103, 104) en vis-à-vis du deuxième groupe d'armures (18).

7. Procédé de contrôle non destructif d'une ligne flexible (10) selon la revendication 5 **caractérisé en ce que** l'unique couche d'armures (14), ou lorsque la ligne flexible (10) comprend plusieurs couches d'armures (14, 23) la couche d'armures (14) la plus proche de la gaine externe (11), comprend au moins un troisième groupe d'armures (19) et un quatrième groupe d'armures (20) distincts l'un de l'autre et distincts du premier groupe d'armures (17) et du deuxième groupe d'armures (18), ledit troisième groupe d'armures (19) et ledit quatrième groupe d'armures (20) étant agencés entre ledit premier groupe d'armures (17) et ledit deuxième groupe d'armures (18) **et en ce que** l'étape a) comprend les étapes suivantes :
a7) agencer une première électrode (103) du deuxième couple d'électrodes (103, 104) en vis-à-vis du troisième groupe d'armures (19),
a8) agencer une deuxième électrode (104) du deuxième couple d'électrodes (103, 104) en vis-à-vis du quatrième groupe d'armures (20).

8. Procédé de contrôle non destructif d'une ligne flexible (10) selon l'une quelconque des revendications précédentes **caractérisé en ce que** l'étape a) comprend l'étape suivante :
a9) agencer les électrodes du au moins un couple d'électrodes (101, 102, 103, 104) en contact avec la gaine externe (11).

9. Procédé de contrôle non destructif d'une ligne flexible (10) selon l'une quelconque des revendications précédentes **caractérisé en ce que** l'étape b) comprend l'étape suivante :
b1) alimenter en tension alternative, ou en courant alternatif, de fréquence déterminée comprise entre 10 Hz et 10 MHz, avantageusement entre 100 kHz et 3 MHz, préférentiellement comprise entre 200 kHz et 800 kHz.

10. Procédé de contrôle non destructif d'une ligne flexible (10) selon l'une quelconque des revendications 2 à 3 **caractérisé en ce que** le signal électrique mesuré lors de l'étape c) est l'impédance complexe aux bornes dudit unique couple d'électrodes (101, 102).

11. Procédé de contrôle non destructif d'une ligne flexible (10) selon l'une quelconque des revendications 5 à 7 **caractérisé en ce que** le signal électrique mesuré lors de l'étape c) est un signal complexe, le module dudit signal complexe étant égal à l'amplitude de la tension mesurée aux bornes du deuxième couple d'électrodes (103, 104), et la phase dudit signal complexe étant égale au déphasage mesuré entre d'une part la tension aux bornes du deuxième couple d'électrodes (103, 104) et d'autre part la tension ou le courant alimentant le premier couple d'électrodes (101, 102).

12. Procédé de contrôle non destructif d'une ligne flexible selon l'une quelconque des revendications 10 à 11 **caractérisé en ce que** l'étape d) comprend l'étape suivante :
d1) comparer le module et/ou la phase du signal électrique mesuré avec des valeurs de référence de manière à déterminer la nature du fluide contenu dans l'espace annulaire (13).

13. Procédé de contrôle non destructif d'une ligne flexible (10) selon l'une quelconque des revendications précédentes **caractérisé en ce que** lors des étapes b) et c) la distance séparant les électrodes du ou de chacun des couples d'électrodes (101, 102, 103, 104) est maintenue fixe.

14. Procédé de contrôle non destructif d'une ligne flexible (10) selon la revendication 13 **caractérisé en ce que** la distance séparant les électrodes du ou de chacun des couples d'électrodes (101, 102, 103, 104) est comprise entre 100 mm et 500 mm, préférentiellement comprise entre 200 mm et 500 mm.

15. Procédé de contrôle non destructif d'une ligne flexible (10) selon l'une quelconque des revendications précédentes **caractérisé en ce que** le groupe d'étapes b), c) et d) est exécuté plusieurs fois, simultanément ou séquentiellement, avec pour chaque exécution une fréquence déterminée différente.

## Patentansprüche

1. Verfahren zur zerstörungsfreien Prüfung einer flexiblen Leitung (10), die zumindest teilweise in ein Gewässer eingetaucht ist, wobei die flexible Leitung (10) mindestens eine Armierungsschicht (15), die innerhalb eines Ringraums (13) angeordnet ist, und eine äußere Hülle (11), die den Ringraum (13) umgibt, umfasst, wobei der Ringraum (13) ein Fluid umfasst, **dadurch gekennzeichnet, dass** das Verfahren ein Verfahren zur zerstörungsfreien Prüfung einer flexiblen Leitung ist, die eine äußere Hülle (11) umfasst, die aus Polymer hergestellt ist, wobei das Verfahren die folgenden Schritte umfasst:
a) Anordnen, außerhalb der flexiblen Leitung (10) in der Nähe der äußeren Hülle (11), mindestens ein Paar Elektroden (101, 102, 103, 104), wobei die Elektroden (101, 102, 103, 104) im Gewässer eingetaucht sind,
b) Versorgen des Paars Elektroden (101, 102) oder ein erstes Paar Elektroden (101, 102) der Paare Elektroden (101, 102, 103, 104) mit einer Wechselspannung einer bestimmten Frequenz oder einem Wechselstrom einer bestimmten Frequenz oder einer gepulsten Spannung oder einem gepulsten Strom, um ein elektromagnetisches Feld zu erzeugen, das sich durch mindestens einen Teil des Ringraums (13) erstreckt, und um eine aus Armierungen (15) und Fluid gebildete Anordnung dem elektromagnetischen Feld auszusetzen,
c) Messen, an dem Paar Elektroden (101, 102) oder einem zweiten Paar Elektroden (103, 104) der Paare Elektroden (101, 102, 103, 104), eines elektrischen Signals, das mit den elektromagnetischen Eigenschaften des mindestens einen Teils des Ringraums (13), der dem erzeugten elektromagnetischen Feld ausgesetzt ist, zusammenhängt,
d) Vergleichen des elektrischen Signals mit Referenzwerten, um zu bestimmen, ob das in dem Ringraum (13) enthaltene Fluid ein Gas oder eine Flüssigkeit ist, insbesondere um zu bestimmen, ob das Fluid ein Gas oder Süßwasser oder Meerwasser ist.

2. Verfahren zur zerstörungsfreien Prüfung einer flexiblen Leitung (10) nach Anspruch 1, **dadurch gekennzeichnet, dass** in Schritt a) ein einziges Paar Elektroden (101, 102) in der Nähe der äußeren Hülle (11) angeordnet wird.

3. Verfahren zur zerstörungsfreien Prüfung einer flexiblen Leitung (10) nach Anspruch 2, **dadurch gekennzeichnet, dass** die einzige Armierungsschicht (14) oder, wenn die flexible Leitung (10) mehrere Armierungsschichten (14, 23) umfasst, die Armierungsschicht (14), die der äußeren Hülle (11) am nächsten liegt, mindestens eine erste Gruppe von Armierungen (17) und eine zweite Gruppe von Armierungen (18) umfasst, die voneinander verschieden sind, **und dass** Schritt a) die folgenden Schritte umfasst:
a1) anordnen einer ersten Elektrode (101) des einzigen Paars Elektroden (101, 102) gegenüber der ersten Gruppe von Armierungen (17),
a2) anordnen einer zweiten Elektrode (102) des einzigen Paars Elektroden (101, 102) gegenüber der zweiten Gruppe von Armierungen (18).

4. Verfahren zur zerstörungsfreien Prüfung einer flexiblen Leitung (10) nach Anspruch 1, **dadurch gekennzeichnet, dass** in Schritt a) zwei Paar Elektroden (101, 102, 103, 104) in der Nähe der äußeren Hülle (11) angeordnet werden, nämlich einerseits ein erstes Paar Elektroden (101, 102) und andererseits ein zweites Paar Elektroden (103, 104).

5. Verfahren zur zerstörungsfreien Prüfung einer flexiblen Leitung (10) nach Anspruch 4, **dadurch gekennzeichnet, dass** die einzige Armierungsschicht (14) oder, wenn die flexible Leitung (10) mehrere Armierungsschichten (14, 23) umfasst, die Armierungsschicht (14), die der äußeren Hülle (11) am nächsten liegt, mindestens eine erste Gruppe von Armierungen (17) und eine zweite Gruppe von Armierungen (18) umfasst, die voneinander verschieden sind, **und dass** Schritt a) die folgenden Schritte umfasst:
a3) anordnen einer ersten Elektrode (101) des ersten Paars Elektroden (101, 102) gegenüber der ersten Gruppe von Armierungen (17),
a4) anordnen einer zweiten Elektrode (102) des ersten Paars Elektroden (101, 102) gegenüber der zweiten Gruppe von Armierungen (18).

6. Verfahren zur zerstörungsfreien Prüfung einer flexiblen Leitung (10) nach Anspruch 5, **dadurch gekennzeichnet, dass** Schritt a) die folgenden Schritte umfasst:
a5) Anordnen einer ersten Elektrode (103) des zweiten Paars Elektroden (103, 104) gegenüber der ersten Gruppe von Armierungen (17),
a6) Anordnen einer zweiten Elektrode (104) des zweiten Paars Elektroden (103, 104) gegenüber der zweiten Gruppe von Armierungen (18).

7. Verfahren zur zerstörungsfreien Prüfung einer flexiblen Leitung (10) nach Anspruch 5, **dadurch gekennzeichnet, dass** die einzelne Armierungsschicht (14) oder, wenn die flexible Leitung (10) mehrere Armierungsschichten (14, 23) umfasst, die Armierungsschicht (14), die der äußeren Hülle (11) am nächsten liegt, mindestens eine dritte Gruppe von Armierungen (19) und eine vierte Gruppe von Armierungen (20) umfasst, die sich voneinander und von der ersten Gruppe von Armierungen (17) und von der zweiten Gruppe von Armierungen (18) unterscheiden, wobei die dritte Gruppe von Armierungen (19) und die vierte Gruppe von Armierungen (20) zwischen der ersten Gruppe von Armierungen (17) und der zweiten Gruppe von Armierungen (18) angeordnet sind, **und dass** Schritt a) die folgenden Schritte umfasst:
a7) Anordnen einer ersten Elektrode (103) des zweiten Paars Elektroden (103, 104) gegenüber der dritten Gruppe von Armierungen (19),
a8) Anordnen einer zweiten Elektrode (104) des zweiten Paars Elektroden (103, 104) gegenüber der vierten Gruppe von Armierungen (20).

8. Verfahren zur zerstörungsfreien Prüfung einer flexiblen Leitung (10) nach einem der vorhergehenden Ansprüche, **dadurch gekennzeichnet, dass** Schritt a) den folgenden Schritt umfasst:
a9) anordnen der Elektroden des mindestens einen Paars Elektroden (101, 102, 103, 104) in Kontakt mit der äußeren Hülle (11).

9. Verfahren zur zerstörungsfreien Prüfung einer flexiblen Leitung (10) nach einem der vorhergehenden Ansprüche, **dadurch gekennzeichnet, dass** Schritt b) den folgenden Schritt umfasst:
b1) versorgen mit Wechselspannung oder mit Wechselstrom mit einer bestimmten Frequenz zwischen 10 Hz und 10 MHz, vorzugsweise zwischen 100 kHz und 3 MHz, vorzugsweise zwischen 200 kHz und 800 kHz.

10. Verfahren zur zerstörungsfreien Prüfung einer flexiblen Leitung (10) nach einem der Ansprüche 2 bis 3, **dadurch gekennzeichnet, dass** das in Schritt c) gemessene elektrische Signal die komplexe Impedanz an den Klemmen des einzigen Paars Elektroden (101, 102) ist.

11. Verfahren zur zerstörungsfreien Prüfung einer flexiblen Leitung (10) nach einem der Ansprüche 5 bis 7, **dadurch gekennzeichnet, dass** das in Schritt c) gemessene elektrische Signal ein komplexes Signal ist, wobei das Modul des komplexen Signals gleich der Amplitude der gemessenen Spannung an den Klemmen des zweiten Paars Elektroden (103, 104) ist, und die Phase des komplexen Signals gleich der gemessenen Phasenverschiebung zwischen einerseits der Spannung an den Klemmen des zweiten Paars Elektroden (103, 104) und andererseits der Spannung oder dem Strom ist, die/der das erste Paar Elektroden (101, 102) versorgt.

12. Verfahren zur zerstörungsfreien Prüfung einer flexiblen Leitung nach einem der Ansprüche 10 bis 11, **dadurch gekennzeichnet, dass** Schritt d) den folgenden Schritt umfasst:
d1) Vergleichen des Moduls und/oder der Phase des gemessenen elektrischen Signals mit Referenzwerten, um die Art des in dem Ringraum (13) enthaltenen Fluids zu bestimmen.

13. Verfahren zur zerstörungsfreien Prüfung einer flexiblen Leitung (10) nach einem der vorhergehenden Ansprüche, **dadurch gekennzeichnet, dass** in den Schritten b) und c) der Abstand, der die Elektroden des oder jedes Paars Elektroden (101, 102, 103, 104) trennt, feststehend bleibt.

14. Verfahren zur zerstörungsfreien Prüfung einer flexiblen Leitung (10) nach Anspruch 13, **dadurch gekennzeichnet, dass** der Abstand, der die Elektroden des oder jedes Paars Elektroden (101, 102, 103, 104) trennt, zwischen 100 mm und 500 mm, vorzugsweise zwischen 200 mm und 500 mm, liegt.

15. Verfahren zur zerstörungsfreien Prüfung einer flexiblen Leitung (10) nach einem der vorhergehenden Ansprüche, **dadurch gekennzeichnet, dass** die Gruppe der Schritte b), c) und d) mehrmals, gleichzeitig oder sequenziell ausgeführt wird, wobei für jede Ausführung eine andere bestimmte Frequenz gilt.

## Claims

1. A method for the nondestructive inspection of a flexible line (10) at least partially immersed in a body of water, the flexible line (10) comprising at least one armor layer (15) arranged inside an annular space (13) and an external sheath (11) surrounding said annular space (13), said annular space (13) comprising a fluid, **characterized in that** the method is a nondestructive control method of a flexible line comprising the following steps:
a) arranging, outside said flexible line (10), at least one pair of electrodes (101, 102, 103, 104) in the vicinity of the external sheath (11), the electrodes (101, 102, 103, 104) being immerged in the body of water,
b) supplying alternating voltage of determined frequency, or alternating current of determined frequency, or pulsed voltage, or pulsed current, to said pair of electrodes (101, 102), or a first pair of electrodes (101, 102) of said pairs of electrodes (101, 102, 103, 104), so as to generate an electromagnetic field extending through at least part of the annular space (13), and to subject an assembly formed by armors (15) and the fluid to said electromagnetic field,
c) measuring, at said pair of electrodes (101, 102), or at a second pair of electrodes (103, 104) of said pairs of electrodes (101, 102, 103, 104), an electrical signal related to the electromagnetic characteristics of said at least one part of the annular space (13) subject to said generated electromagnetic field,
d) comparing said electrical signal with the reference values so as to determine whether the fluid contained in the annular space (13) is a gas or a liquid, in particular so as to determine whether the fluid is a gas or freshwater or seawater.

2. The method for the nondestructive inspection of a flexible line (10) according to claim 1, **characterized in that** during step a), a single pair of electrodes (101, 102) is arranged near the external sheath (11).

3. The method for the nondestructive inspection of a flexible line (10) according to claim 2, **characterized in that** the sole armor layer (14), or when the flexible line (10) comprises several armor layers (14, 23), the armor layer (14) closest to the external sheath (11), comprises at least a first group of armors (17) and a second group of armors (18) separate from one another, **and in that** step a) comprises the following steps:
a1) arranging a first electrode (101) from the sole pair of electrodes (101, 102) opposite the first group of armors (17),
a2) arranging a second electrode (102) from the sole pair of electrodes (101, 102) opposite the second group of armors (18).

4. The method for the nondestructive inspection of a flexible line (10) according to claim 1, **characterized in that** during step a), two electrode pairs (101, 102, 103, 104) are arranged in the vicinity of the external sheath (11), namely on the one hand a first pair of electrodes (101, 102) and on the other hand a second pair of electrodes (103, 104).

5. The method for the nondestructive inspection of a flexible line (10) according to claim 4, **characterized in that** the sole armor layer (14), or when the flexible line (10) comprises several armor layers (14, 23), the armor layer (14) closest to the external sheath (11), comprises at least a first group of armors (17) and a second group of armors (18) separate from one another, **and in that** step a) comprises the following steps:
a3) arranging a first electrode (101) from the first pair of electrodes (101, 102) opposite the first group of armors (17),
a4) arranging a second electrode (102) from the first pair of electrodes (101, 102) opposite the second group of armors (18).

6. The method for the nondestructive inspection of a flexible line (10) according to claim 5, **characterized in that** step a) comprises the following steps:
a5) arranging a first electrode (103) from the second pair of electrodes (103, 104) opposite the first group of armors (17),
a6) arranging a second electrode (104) from the second pair of electrodes (103, 104) opposite the second group of armors (18).

7. The method for the nondestructive inspection of a flexible line (10) according to claim 5, **characterized in that** the sole armor layer (14), or when the flexible line (10) comprises several armor layers (14, 23), the armor layer (14) closest to the external sheath (11), comprises at least a third group of armors (19) and a fourth group of armors (20) separate from one another and separate from the first group of armors (17) and the second group of armors (18), said third group of armors (19) and said fourth group of armors (20) being arranged between said first group of armors (17) and said second group of armors (18), **and in that** step a) comprises the following steps:
a7) arranging a first electrode (103) from the second pair of electrodes (103, 104) opposite the third group of armors (19),
a8) arranging a second electrode (104) from the second pair of electrodes (103, 104) opposite the fourth group of armors (20).

8. The method for the nondestructive inspection of a flexible line (10) according to any one of the preceding claims, **characterized in that** step a) comprises the following step:
a9) arranging the electrodes of at least one pair of electrodes (101, 102, 103, 104) in contact with the external sheath (11).

9. The method for the nondestructive inspection of a flexible line (10) according to any one of the preceding claims, **characterized in that** step b) comprises the following step:
b1) supplying alternating voltage, or alternating current, with a determined frequency between 10 Hz and 10 MHz, advantageously between 100 kHz and 3 MHz, preferably between 200 kHz and 800 kHz.

10. The method for the nondestructive inspection of a flexible line (10) according to any one of claims 2 to 3, **characterized in that** the electrical signal measured during step c) is the complex impedance across the terminals of said sole electrode pair (101, 102).

11. The method for the nondestructive inspection of a flexible line (10) according to any one of claims 5 to 7, **characterized in that** the electrical signal measured during step c) is a complex signal, the modulus of said complex signal is equal to the amplitude of the voltage measured across the terminals of the second pair of electrodes (103, 104), and the phase of said complex signal being equal to the phase shift measured between the voltage across the terminals of the second pair of electrodes (103, 104) on the one hand, and the voltage or the current supplying the first pair of electrodes (101, 102) on the other hand.

12. The method for the nondestructive inspection of a flexible line according to any one of claims 10 to 11, **characterized in that** step d) comprises the following step:
d1) comparing the modulus and/or the phase of the measured electrical signal with reference values so as to determine the nature of the fluid contained in the annular space (13).

13. The method for the nondestructive inspection of a flexible line (10) according to any one of the preceding claims, **characterized in that** during steps b) and c), the distance separating the electrodes of the or each of the pairs of electrodes (101, 102, 103, 104) is kept fixed.

14. The method for the nondestructive inspection of a flexible line (10) according to claim 13, **characterized in that** the distance separating the electrodes of the or each of the pairs of electrodes (101, 102, 103, 104) is between 100 mm and 500 mm, preferably between 200 mm and 500 mm.

15. The method for the nondestructive inspection of a flexible line (10) according to any one of the preceding claims, **characterized in that** the group of steps b), c) and d) is carried out several times, simultaneously or sequentially, with a different determined frequency for each execution.
